# NEUE EUROPÄISCHE PATENTSCHRIFT

(11) **EP 3 568 525 B2**
(45) Veröffentlichungstag und Bekanntmachung des Hinweises auf die Entscheidung über den Einspruch: **11.11.2026**
(45) Hinweis auf die Patenterteilung: 15.11.2023
(21) Anmeldenummer: 18710325.4
(22) Anmeldetag: 13.02.2018
(51) Int. Cl.: E01D 19/04, E04H 9/02

(54) **GLEITPENDELLAGER UND BEMESSUNGSVERFAHREN FÜR EIN SOLCHES**
SLIDING PENDULUM BEARING AND MEASURING METHOD THEREFOR
PALIER LISSE À ALIGNEMENT AUTOMATIQUE ET PROCÉDÉ DE DIMENSIONNEMENT D'UN TEL PALIER

(30) Priorität: 14.02.2017 DE 102017202317
(43) Veröffentlichungstag der Anmeldung: 20.11.2019
(73) Patentinhaber: Maurer Engineering GmbH, 80807 München (DE)
(72) Erfinder: WEBER, Felix, 8118 Pfaffhausen (CH); BRAUN, Christian, 83607 Holzkirchen (DE)
(74) Vertreter: von Hirschhausen, Helge
(86) Internationale Anmeldenummer: PCT/EP2018/053567
(87) Internationale Veröffentlichungsnummer: WO 2018/149828

(56) Entgegenhaltungen:
- WO-A1-2012/114246
- WO-A1-2014/173622
- CN-B- 101 705 656
- DE-A1- 102005 060 375
- US-A- 4 644 714

## Beschreibung

Die vorliegende Erfindung betrifft ein Gleitpendellager zum Schutz eines Bauwerks vor dynamischen Beanspruchungen aus überwiegend horizontalen Stößen sowie ein Bemessungsverfahren für solche Gleitpendellager.

Gattungsgemäße Gleitpendellager weisen üblicherweise eine erste Gleitplatte, eine zweite Gleitplatte und einen zwischen den beiden Gleitplatten beweglich angeordneten Gleiter auf, wobei jede der beiden Gleitplatten eine gekrümmte Hauptgleitfläche aufweist und der Gleiter flächig mit einer ersten Hauptgleitfläche der ersten Gleitplatte und mit einer zweiten Hauptgleitfläche der zweiten Gleitplatte in Kontakt steht.

Solche Gleitpendellager sowie entsprechende Bemessungsverfahren für solche Gleitpendellager sind prinzipiell aus dem Stand der Technik, wie zum Beispiel aus der CN 101 705 656 B1, DE 10 2005 060375 A1, WO 2014/173622 A1 oder WO 2012/114246 A1, hinreichend bekannt.

Derartige Gleitpendellager werden insbesondere für eine Erdbebenisolierung von Bauwerken, wie beispielsweise Häusern oder Brücken, deren erste Eigenfrequenz typischerweise im Bereich von etwa 0,5 Hz bis 2 Hz liegt, eingesetzt. Insbesondere können dabei die gekrümmten Hauptgleitflächen nach DIN EN 15129:2010 sphärisch gekrümmt sein. Liegt die erste Eigenfrequenz deutlich niedriger als 0,5 Hz, ist das Bauwerk dank seiner großen Schwingungsperiodendauer vor erdbebeninduzierten Bodenerschütterungen genügend geschützt. Ist die erste Eigenfrequenz hingegen größer als 2 Hz, kann ein Erdbeben wegen der hohen Steifigkeit des Bauwerks keine wesentlichen Bauwerksverschiebungen und damit einhergehende Schäden bewirken.

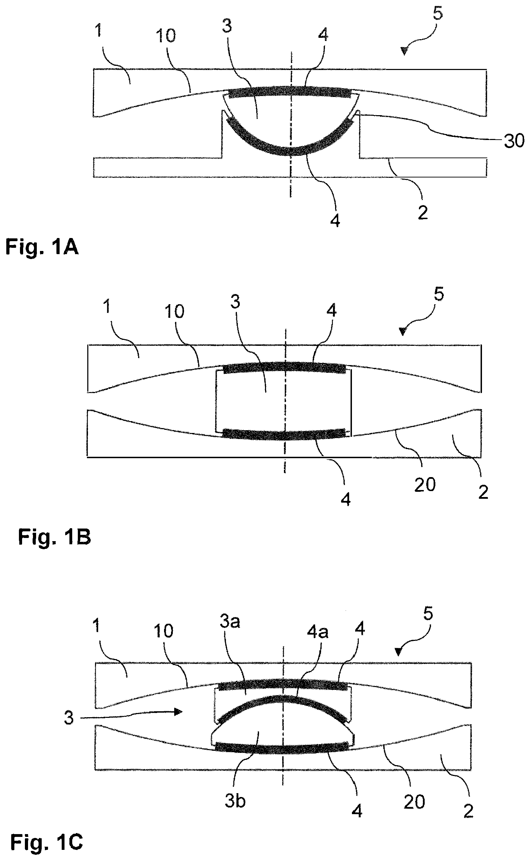

Zurzeit sind im Wesentlichen vier Typen von unterschiedlichen Gleitpendellagern bekannt. Diese sind schematisch in den Figuren 1A bis 1D abgebildet und werden im Folgenden kurz erläutert.

Zum einen gibt es das in Fig. 1A schematisch dargestellte Gleitpendellager 5 des Typs "single curved surface slider" (im folgenden als "Single" bezeichnet), bei dem eine erste Gleitplatte 1 über eine erste gekrümmte Hauptgleitfläche 10 mit einem Gleiter 3 und eine zweite Gleitplatte 2 über eine zweite gekrümmte Gleitfläche 30 mit dem Gleiter 3 flächig in Kontakt steht. Im gezeigten Fall des Singles sind dabei jeweils zwischen dem Gleiter 3 und den beiden Gleitflächen 10 und 30 Gleitelemente 4 angeordnet, um die Reibeigenschaften zwischen dem Gleiter 3 und den beiden Gleitflächen 10 und 30 der Gleitplatten 1 und 2 einstellen zu können.

Die Besonderheit bei der Ausführung als Single ist, dass das Isolationsverhalten des Gleitpendellagers im Wesentlichen durch die Kontaktfläche zwischen der ersten Hauptgleitfläche 10 und dem Gleiter 3 definiert wird. Im Gegensatz dazu ist die zweite Gleitplatte 2 mit ihrer zweiten Gleitfläche 30 im Wesentlichen dafür vorgesehen, über Rotation ein Klemmen des Gleiters 3 an der ersten Hauptgleitfläche 10 zu verhindern und somit einen optimalen Kontakt zwischen dem Gleiter 3 und der ersten Hauptgleitfläche 10 der ersten Gleitplatte 1 zu gewährleisten.

Wird nun das Single auf ein bestimmtes Erdbeben mit einer entsprechenden Spitzenbodenbeschleunigung ausgelegt, wird deshalb lediglich der Kontakt zwischen der ersten Gleitplatte 1 und dem Gleiter 3 auf einen entsprechenden Lastfall ausgelegt.

Unter "auslegen" wird hierbei ein Optimieren insbesondere der Geometrie und des Reibverhaltens der Kontaktfläche zwischen dem Gleiter 3 und der entsprechenden Gleitplatte 1 verstanden. Dies kann zum Beispiel unter Zuhilfenahme eines linearen Antwortspektrums oder mittels nichtlinearer Simulation erfolgen. Bei diesem Optimierungsvorgang ist stets ein Kompromiss zwischen der Isolationswirkung des Gleitpendellagers und der vorzuhaltenden Wegkapazität für die Lagerbewegung des Gleitpendellagers zu finden. Dies bedeutet, dass eine perfekte Isolation der Gebäudebewegung von einer Bodenbewegung erwünscht ist, diese jedoch nur mit einem sehr großen Krümmungsradius der Gleitplatte 1 erzeugt werden kann, was aber eine eher große Wegkapazität des Lagers bedingt und das Bauwerk nach dem Erdbeben allenfalls nicht mehr am gleichen Ort steht (vgl.: "Rückzentrierfehler"). Nachdem die mögliche Wegkapazität für die Lagerbewegung jedoch durch den vorgegebenen Bauraum begrenzt ist und ein minimal definiertes Rückzentriervermögen gewährleistet sein muss, kann die Isolationswirkung nicht maximiert werden.

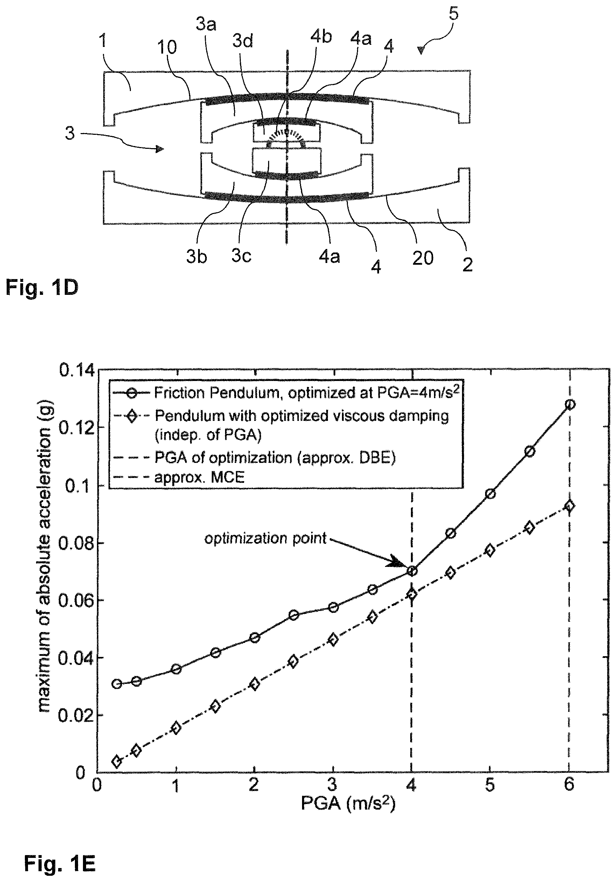

Was also unter "auslegen" zu verstehen ist, lässt sich beispielsweise anhand von Fig. 1E veranschaulichen.

Fig. 1E zeigt ein Diagramm, in welchem der Verlauf der maximalen absoluten Bauwerksbeschleunigung in Abhängigkeit einer durch ein entsprechendes Erdbeben hervorgerufenen Spitzenbodenbeschleunigung (engl.: "peak ground acceleration" - PGA), dargestellt ist. Aus der Vielzahl der denkbaren Werte für die Spitzenbodenbeschleunigung sind für die Auslegung von Gleitpendellagern insbesondere zwei Werte entscheidend. Einerseits ist dies der Wert der Spitzenbodenbeschleunigung des sogenannten Bemessungserdbebens (engl.: "design basis earthquake" - DBE), welcher im gezeigten Beispiel der Fig. 1E zu 4 m/s² angenommen wird. Andererseits ist es der Wert der Spitzenbodenbeschleunigung des sogenannten größten wahrscheinlichen Erdbebens (engl.: "maximum credible earthquake" - MCE), welcher im gezeigten Beispiel der Fig. 1E zu 6 m/s² angenommen wird. Das Bemessungserdbeben entspricht dabei dem Erdbeben, für welches das vorgesehene Bauwerk bestmöglich gegenüber Erdbebenanregung isoliert sein soll. Das größte wahrscheinliche Erdbeben entspricht hingegen dem am Standort des Bauwerks maximal zu erwartenden Erdbeben. Der Wert der Spitzenbodenbeschleunigung des größten wahrscheinlichen Erdbebens ist größer als derjenige des Bemessungserdbebens und kann auch als ein Vielfaches, beispielsweise als das 1,5-Fache, des Werts der Spitzenbodenbeschleunigung des Bemessungserdbebens festgelegt werden. Bei Erdbeben mit Spitzenbodenbeschleunigungswerten zwischen dem Spitzenbodenbeschleunigungswert des Bemessungserdbebens und des größten wahrscheinlichen Erdbebens können an dem Bauwerk Schäden auftreten, diese sind jedoch noch reparabel.

Wie in Fig. 1E dargestellt, weist die maximale absolute Bauwerksbeschleunigung für ein Gleitpendellager ohne Reibung aber mit optimaler viskoser Dämpfung (vgl.: Kurve zu "Pendulum with optimized viscous damping"), im Folgenden Gleitpendellager mit optimaler viskoser Dämpfung genannt, in Abhängigkeit der Spitzenbodenbeschleunigung einen linearen Verlauf auf. Dieser Verlauf spiegelt die ideale Isolation des Bauwerks mit einem passiven Isolator wieder. Die Kombination eines Gleitpendellagers mit einem optimalen viskosen Dämpfer ist jedoch teuer, weshalb in der Praxis auf Gleitpendellager mit Reibung zurückgegriffen wird.

In Fig. 1E ist neben der Kurve für das Gleitpendellager mit optimaler viskoser Dämpfung ein beispielhafter Verlauf für die maximalen absoluten Bauwerkebeschleunigungen eines Gleitpendellagers mit Reibung gezeigt (vgl.: Kurve zu "Friction Pendulum"). Hierbei ist zu sehen, dass das Isolationsverhalten für herkömmliche Bauwerkslager sich nicht linear in Abhängigkeit der Spitzenbodenbeschleunigung entwickelt. Somit ist es für Gleitpendellager mit Reibung im Allgemeinen nicht möglich, für eine Vielzahl von Spitzenbodenbeschleunigungswerten nahe an das Verhalten des Gleitpendellagers mit optimaler viskoser Dämpfung zu kommen.

Ziel der Auslegung bzw. Optimierung des Gleitpendellagers mit Reibung soll also eine Anpassung der Geometrie sowie der Reibwerte des Gleitpendellagers dahingehend sein, dass die maximale absolute Bauwerksbeschleunigung bei dem Wert für die Spitzenbodenbeschleunigung ein ähnliches Verhalten zeigt wie ein Gleitpendellager mit optimaler viskoser Dämpfung.

Wie bereits oben beschrieben ist bei einem als Single (vgl. Fig. 1A) ausgeführten Gleitpendellager die zweite Gleitplatte 2 mit ihrer zweiten Gleitfläche 30 für die Rotation des Gleiters 3 notwendig. Um dabei eine möglichst widerstandsfreie Rotation des Gleiters zu gewährleisten, wird die zweite Gleitfläche 30 geschmiert, womit deren Reibwert sehr tief ist (häufig im Bereich von 0.4% bis 1.5%) und diese Reibung nicht zur Reibung der ersten Hauptgleitfläche 10 gezählt werden darf. Somit ist das Isolationsverhalten eines als Single ausgeführten Gleitpendellagers (vgl. Fig. 1A) allein durch die Krümmung und Reibung der ersten Hauptgleitfläche 10 definiert.

Als Weiterbildung des in Fig. 1A gezeigten Single ist das Gleitpendellager vom Typ Double (im Folgenden als "Double" bezeichnet) bekannt, welches in Fig. 1B dargestellt ist und im Englischen als "double curved surface slider" bezeichnet wird.

Das Double weist analog zum Single eine erste Gleitplatte 1 mit einer ersten Hauptgleitfläche 10, eine zweite Gleitplatte 2 mit einer zweiten Hauptgleitfläche 20, einem Gleiter 3 sowie zwei Gleitelemente 4 auf.

Im Gegensatz zum Single ist dabei jedoch die zweite Hauptgleitfläche 20 bezüglich ihres effektiven Radius und ihres Reibwertes identisch zur ersten Hauptgleitfläche 10. Um gleiche Isolationsperiodendauern des Single (5 in Fig. 1A) und Double (5 in Fig. 1B) zu gewährleisten, wird die Summe der beiden effektiven Radien des Double gleich dem effektiven Radius des Single gewählt. Da die beiden effektiven Radien und die beiden Reibwerte des Double i.d.R. gleich gewählt werden, teilt sich die gesamte Lagerbewegung des Double gleichmäßig auf die Hauptgleitflächen 10 und 20 des Double auf. Daher sind die maximalen Gleitwege an den Hauptgleitflächen 10 und 20 des Double jeweils in etwa halb so lang wie der Gleitweg an der Hauptgleitfläche 10 des Single, womit das Double kompakter baut.

Eine Weiterbildung des in Fig. 1b gezeigten Doubles 5 ist das in Fig. 1C gezeigte Double mit Gelenk (im Folgenden als "Double mit Gelenk" bezeichnet), wo der Gleiter 3 in zwei Teilen 3a und 3b ausgebildet ist, was einem Gelenk entspricht. Im Englischen wird das Double mit Gelenk als "double curved surface slider with articulated slider" 5 benannt. Analog zum Double ohne Gelenk (Fig. 1B) weist das Double mit Gelenk (Fig. 1C) eine erste Gleitplatte 1 mit einer ersten Hauptgleitfläche 10, eine zweite Gleitplatte 2 mit einer zweiten Hauptgleitfläche 20, einen Gleiter 3, sowie mehrere Gleitelemente 4 auf.

Im Gegensatz zum Double ohne Gelenkt 5 ist beim Double mit Gelenk der Gleiter 3 in zwei Gleiterteile 3a und 3b unterteilt, wobei die beiden Gleiterteile 3a und 3b über ein weiteres Gleitelement 4a miteinander in Kontakt stehen.

Analog zur zweiten Hauptgleitfläche 20 des Single dient diese Aufteilung dazu, ein optimales Anliegen des Gleiters 3 bzw. der Gleiterteile 3a und 3b an der ersten Hauptgleitfläche 10 und der zweiten Hauptgleitfläche 20 zu gewährleisten.

Folglich wird das Isolationsverhalten eines Double mit Gelenk im Wesentlichen durch die Kontaktflächen zwischen den Gleitplatten 1 und 2 mit dem entsprechenden Gleiterteilen 3a und 3b definiert.

Zu guter Letzt ist in Fig. 1D ein weiter fortgebildetes Gleitpendellager in Form eines sogenannten "triple friction pendulum" 5 (im Folgenden als "Triple" bezeichnet) dargestellt.

Ein Triple weist analog zum Double mit Gelenk eine erste Gleitplatte 1 mit einer ersten Hauptgleitfläche 10, eine zweite Gleitplatte 2 mit einer zweiten Hauptgleitfläche 20 sowie einen Gleiter 3 und verschiedene Gleitelemente 4 auf. Ebenfalls analog zum Double mit Gelenk weist der Gleiter 3 des Triple ein erstes Gleiterteil 3a und ein zweites Gleiterteil 3b auf.

Im Gegensatz zum Double mit Gelenk stehen beim Triple jedoch die beiden Gleiterteile 3a und 3b miteinander nicht in direktem Kontakt, sondern sind über weitere Gleiterteile 3c und 3d sowie entsprechende Gleitelemente 4a miteinander gekoppelt. Dabei sind die beiden weiteren Gleiterteile 3c und 3d über die gelenkige sphärische Fläche analog zum gelenkigen Gleiter des Double mit Gelenk gekoppelt.

Auch beim Triple erfolgt die überwiegende Isolationswirkung des Gleitpendellagers an den beiden Hauptgleitflächen 10 und 20, womit sich deren Bemessungen nach den Bemessungen der beiden Hauptgleitflächen 10 und 20 des Double mit Gelenk richten.

Wie bereits oben unter Bezug auf Fig. 1E beschrieben, weisen die eben beschriebenen bekannten Gleitpendellager (Single und Double ohne Gelenk) alle ein nichtlineares Isolationsverhalten in Abhängigkeit der Spitzenbodenbeschleunigung auf. Dies kann auch durch die aus dem Stand der Technik bekannte Weiterbildung in Form des Double mit Gelenk nicht abgefangen werden; das Triple erzeugt im Bereich sehr kleiner bis mittlerer Spitzenbodenbeschleunigungen annährend ein lineares Verhalten, nicht aber im Bereich von mittleren bis maximalen Spitzenbodenbeschleunigungen.

Damit ergibt sich das Problem, dass die entsprechenden Gleitpendellager auf einen bestimmten Spitzenbodenbeschleunigungswert hin optimiert werden müssen, das Isolationsverhalten des Gleitpendellagers aber bei Spitzenbodenbeschleunigungswerten, welche nicht dem für die Optimierung benutzten Wert entsprechen, vergleichsweise schlecht ist. Insbesondere führt der für das Bemessungserdbeben optimierte Reibwert des Gleitpendellagers für Spitzenbodenbeschleunigungswerte des größten wahrscheinlichen Erdbebens einerseits zu verhältnismäßig schlechter Isolationswirkung und andererseits zu relativ großen Lagerbewegungen, wodurch das Lager groß bauen würde und somit teuer wäre.

Folglich ist es Aufgabe der vorliegenden Erfindung, ein Gleitpendellager sowie ein Bemessungsverfahren für ein solches Gleitpendellager bereitzustellen, durch welches im Betriebszustand an einem durch das Gleitpendellager isolierten Bauwerk niedrigere Belastungen auftreten als bei herkömmlich bekannten Gleitpendellagern.

Diese Aufgabe wird durch ein Gleitpendellager nach Anspruch 1 und ein Bemessungsverfahren nach Anspruch 10 gelöst. Vorteilhafte Weiterbildungen der Erfindung ergeben sich aus den abhängigen Ansprüchen 2 bis 9 sowie den Ansprüchen 11 und 12.

Das erfindungsgemäße Gleitpendellager weist auf, dass die erste Hauptgleitfläche der ersten Gleitplatte auf einen ersten Lastfall und die zweite Hauptgleitfläche der zweiten Gleitplatte auf einen zweiten Lastfall ausgelegt ist, wobei sich der erste Lastfall von dem zweiten Lastfall unterscheidet.

Unter "Lastfall" ist hierbei ein bestimmter Spitzenbodenbeschleunigungswert eines entsprechenden Erdbebens zu verstehen.

Durch die Auslegung der beiden Hauptgleitflächen bezüglich deren effektiven Radien und Reibwerte auf unterschiedliche Lastfälle wird erreicht, dass das Isolationsverhalten des Gleitpendellagers für alle Spitzenbodenbeschleunigungen bis hin zum Spitzenbodenbeschleunigungswert des größten wahrscheinlichen Erdbebens dem Verhalten des Gleitpendellagers mit optimaler viskoser Dämpfung weiter angenähert wird, als dies bei einer Auslegung des gesamten Gleitpendellagers auf nur einen bestimmten Lastfall, wie dies für die Gleitpendellager aus dem Stand der Technik zutrifft, möglich wäre. Damit ist es möglich, auch bei Spitzenbodenbeschleunigungen jenseits des für das Gleitpendellager angenommenen Spitzenbodenbeschleunigungswerts des Bemessungserdbebens ein erheblich verbessertes Isolationsverhalten zu erhalten und dabei die maximale Lagerbewegung nicht unverhältnismäßig zu vergrößern.

Vorteilhafterweise ist die erste Hauptgleitfläche auf einen ersten Lastfall mit einem Wert für die Spitzenbodenbeschleunigung ausgelegt, welcher höchstens dem Spitzenbodenbeschleunigungswert des größten wahrscheinlichen Erdbebens und wenigstens dem Spitzenbodenbeschleunigungswert des Bemessungserdbebens entspricht. Dadurch wird ein wesentlich besseres Isolationsverhalten des Gleitpendellagers bei Erdbeben mit Spitzenbodenbeschleunigungswerten größer dem Spitzenbodenbeschleunigungswert des Bemessungserdbebens erreicht, was potentielle Schäden am Bauwerk bei diesen Spitzenbodenbeschleunigungswerten im Vergleich zu herkömmlichen Lagern signifikant reduziert. Dies spart unter anderem Kosten bei einer Wiederinstandsetzung des Bauwerks nach einem Erdbeben mit einem Spitzenbodenbeschleunigungswert oberhalb des Spitzenbodenbeschleunigungswerts des Bemessungserdbebens.

Weiterbildend kann die zweite Hauptgleitfläche auf einen zweiten Lastfall ausgelegt sein, dessen Spitzenbodenbeschleunigungswerte kleiner als oder gleich dem Spitzenbodenbeschleunigungswert des Bemessungserdbebens sind. Dadurch ist es möglich, die Isolationswirkung des Gleitpendellagers für Erdbeben mit Spitzenbodenbeschleunigungswerten unterhalb des Spitzenbodenbeschleunigungswerts des Bemessungserdbebens im Vergleich zu herkömmlichen Single oder Double zu verbessern. Damit können Beanspruchungen eines entsprechenden Bauwerks durch Erdbeben mit niedrigen Spitzenbodenbeschleunigungswerten abgeschwächt werden. Folglich kann das Auftreten von Ermüdungserscheinungen an dem Bauwerk, welche durch Erdbeben mit kleinen Spitzenbodenbeschleunigungswerten hervor-gerufen werden, signifikant reduziert oder gar vermieden werden.

Zweckmäßig ist es ferner, wenn der kleinere der Reibwerte der beiden Hauptgleitflächen, insbesondere und im Allgemeinen der Reibwert der zweiten Hauptgleitfläche, so groß ist, dass ein vordefinierter Mindestschubwiderstand des Gleitpendellagers gewährleistet ist. Mindestschubwiderstand bedeutet hierbei, dass eine gewisse Mindestanregung nötig ist, um ein Auslösen des Gleitpendellagers, also eine Bewegung des Gleiters entlang wenigstens einer der beiden Hauptgleitflächen des Gleitpendellagers, hervorzurufen. Durch die Gewährleistung eines vordefinierten Mindestschubwiderstands wird auch der Verschleiß des Gleitpendellagers reduziert, da nicht jede auch noch so kleine Anregung des Bauwerks zu einer Lagerbewegung im Gleitpendellager führt. Dies ist besonders vorteilhaft, wenn das durch das Gleitpendellager isolierte Bauwerk bereits dafür ausgelegt ist, Erdbeben mit nur kleinen Spitzenbodenbeschleunigungswerten ohne Schäden oder übermäßige Ermüdungserscheinungen zu verkraften.

Praktischerweise sind die beiden Hauptgleitflächen ferner in ihrer Geometrie und/oder ihrem Reibverhalten derart aufeinander abgestimmt, dass die Kurve der resultierenden absoluten Bauwerksbeschleunigung als Funktion der Spitzenbodenbeschleunigung bis hin zum Spitzenbodenbeschleunigungswert des größten wahrscheinlichen Erdbebens, einen im Wesentlichen linearen Verlauf aufweist. Unter der Geometrie der Hauptgleitflächen ist hierbei beispielsweise ein effektiver Krümmungsradius der Hauptgleitflächen zu verstehen, während das Reibverhalten beispielsweise durch die Reibwerte der jeweiligen Hauptgleitfläche bestimmt wird. Durch die Linearität des Verlaufs der resultierenden absoluten Bauwerksbeschleunigung in Abhängigkeit der Spitzenbodenbeschleunigung ist es möglich, das Isolationsverhalten des Gleitpendellagers noch weiter dem Isolationsverhalten des Gleitpendellagers mit optimaler viskoser Dämpfung anzunähern und somit gegenüber den herkömmlich bekannten Gleitlagern, welche einen nicht-linearen Verlauf der absoluten Bauwerksbeschleunigung in Abhängigkeit der Spitzenbodenbeschleunigung aufweisen, zu verbessern.

Insbesondere können die beiden Hauptgleitflächen in ihrer Geometrie und/oder ihrem Reibverhalten derart aufeinander abgestimmt sein, dass eine Kurve der resultierenden absoluten Bauwerksbeschleunigung als Funktion der Spitzenbodenbeschleunigung einen im Vergleich zu herkömmlichen Gleitpendellagern an den Verlauf der resultierenden absoluten Bauwerksbeschleunigung eines Gleitpendellagers mit optimaler viskoser Dämpfung dichter angenäherten Verlauf aufweist. Dies zeigt sich insbesondere darin, dass die Werte für die resultierende absolute Bauwerksbeschleunigung im Durchschnitt für Spitzenbodenbeschleunigungswerte bis hin zum Spitzenbodenbeschleunigungswert des größten wahrscheinlichen Erdbebens kleiner sind als bei den herkömmlich bekannten Gleitlagern, bzw. näher an dem entsprechenden Wert für das Gleitpendellager mit optimaler viskoser Dämpfung liegen. Somit weist das Gleitpendellager idealer Weise über den gesamten Bereich der relevanten Spitzenbodenbeschleunigungswerte hinweg einen dem Gleitpendellager mit optimaler viskoser Dämpfung näherliegenden Verlauf auf als herkömmliche Gleitpendellager und kommt damit dem idealen Verlauf der Isolationswirkung näher als die herkömmlichen Gleitpendellager.

Von Vorteil ist es auch, wenn die beiden Hauptgleitflächen in ihrer Geometrie und/oder in ihrem Reibverhalten derart aufeinander abgestimmt sind, dass der Gleitweg der Gleiters beim zweiten Lastfall, also mit kleineren Spitzenbodenbeschleunigungen, entlang der zweiten Hauptgleitfläche wesentlich größer oder in etwa gleich groß ist wie der Gleitweg des Gleiters entlang der ersten Hauptgleitfläche, und im ersten Lastfall, also bei größeren bis maximalen Spitzenbodenbeschleunigungen, der Gleitweg des Gleiters entlang der ersten Hauptgleitfläche größer oder kleiner ist als entlang der zweiten Hauptgleitfläche. Durch diese Ausgestaltung ist es möglich, die Wirkung der beiden Hauptgleitflächen voneinander zu trennen. Damit ist es beispielsweise auch möglich, die Wegkapazität und damit die Dimensionen des gesamten Gleitpendellagers zu verkleinern, was die maximal mögliche Isolationswirkung des erfindungsgemäßen Lagers zwar etwas reduziert aber immer noch zu einer besseren Isolationswirkung führt als bei einem herkömmlichen Single oder Double. Um die Wirkung der beiden Hauptgleitflächen klar voneinander trennen zu können und um die Lagerwegkapazität zu minimieren kann ein Begrenzungsring auf der einen Hauptgleitfläche eingesetzt werden. Es ist ausdrücklich darauf hinzuweisen, dass dieser Begrenzungsring nicht die gesamte Wegkapazität des Lagers begrenzt.

Erfindungsgemäß weist die erste Hauptgleitfläche einen ersten effektiven Krümmungsradius *R*_{eff,1} und die zweite Hauptgleichfläche einen zweiten effektiven Krümmungs-radius *R*_{eff,2} auf, wobei die Summe von *R*_{eff,1} und *R*_{eff,2} mindestens das 1,4-Fache des effektiven Krümmungsradius beträgt, der unter der Annahme ermittelt wird, dass das Gleitpendellager nur eine einzige gekrümmt geformte Hauptgleitfläche aufweist.

Bevorzugt ist die Summe *R*_{eff,1} und *R*_{eff,2} im Bereich des 1,4-Fachen bis 2,0-Fachen des effektiven Krümmungsradius eines Gleitpendellagers mit nur einer gekrümmt geformten Hauptgleitfläche.

Auch bevorzugt ist die Summe von *R*_{eff,1} und *R*_{eff,2} größer als das 2-Fache des effektiven Krümmungsradius eines Gleitpendellagers mit nur einer gekrümmt geformten Hauptgleitfläche. Hierbei ist bevorzugt, dass die Wegkapazität des Gleitpendellagers nicht größer ist als diejenige des Gleitpendellagers mit nur einer gekrümmt geformten Hauptgleitfläche oder als diejenige eines Gleitpendellagers mit zwei identischen gekrümmt geformten Hauptgleitflächen nach Art eines Doubles, deren effektive Krümmungsradien in etwa dem 0,2485-Fachen des Quadrates einer gewünschten Isolationsperiodendauer T_{ISO} in Sekunden des zu schützenden Bauwerks mit einem Gleitpendellager mit nur einer oder zwei identischen gekrümmt geformten Hauptgleitflächen (Typ Single oder Double) ist.

Bevorzugt weist die erste Hauptgleitfläche einen ersten effektiven Krümmungsradius *R*_{eff,1} und die zweite Hauptgleichfläche (20) einen zweiten effektiven Krümmungsradius *R*_{eff,2} auf, wobei *R*_{eff,1} und *R*_{eff,2} jeweils mindestens das 0,7-Fache des effektiven Krümmungsradius von einem Gleitpendellager mit nur einer gekrümmt geformten Hauptgleitfläche betragen.

Weiter bevorzugt sind *R*_{eff,1} und *R*_{eff,2} jeweils größer als das 0,7-Fache des effektiven Krümmungsradius von einem Gleitpendellager mit nur einer gekrümmt geformten Hauptgleitfläche.

Besonders vorteilhaft ist es, wenn die erste Hauptgleitfläche einen ersten effektiven Krümmungsradius R_{eff,1} aufweist, der in etwa so groß ist, wie für ein Gleitpendellager mit nur einer gekrümmt geformten Hauptgleitfläche und die zweite Hauptgleitfläche einen zweiten effektiven Krümmungsradius R_{eff,2} aufweist, der im Bereich des 0,75-Fachen bis 2-Fachen, und insbesondere im Bereich des 0,90-Fachen bis 1,5-fachen, des ersten effektiven Krümmungsradius R_{eff,1} liegt, und besonders bevorzugt gleich dem ersten effektiven Krümmungsradius R_{eff,1} ist. Diese Konfiguration ist ausgehend von einem Single durch eine Anpassung des Krümmungsradius der zweiten Hauptgleitfläche gut zu erreichen, unterscheidet sich jedoch von der Ausgestaltung eines entsprechenden Doubles ohne Gelenk dahingehend, dass wie bereits oben beschrieben, bei einem Double die effektiven Krümmungsradien der beiden Hauptgleitflächen in der Summe gerade dem effektiven Krümmungsradius der ersten Hauptgleitfläche des Singles entsprechen und nicht bereits der Krümmungsradius der ersten Hauptgleitfläche dem effektiven Krümmungsradius der ersten Hauptgleitfläche des Single entspricht. Dabei ist die Auslegung bezüglich Festigkeit und damit die resultierende Geometrie und Herstellung des erfindungsgemäßen Gleitlagers erheblich vereinfacht, da beispielsweise zwei identische Gleitplatten verwendet werden können, was sowohl während der Festigkeitsauslegung des Gleitlagers sowie auch während seiner Herstellung erheblich Kosten einspart.

Sinnvoll ist es ferner, wenn ein erster effektiver Krümmungsradius R_{eff,1} der ersten Hauptgleitfläche in Metern in etwa dem 0,25-fachen des Quadrats einer gewünschten Isolationsperiodendauer T_{ISO} in Sekunde des durch das Gleitpendellager zu schützenden Bauwerks entspricht. Unter Isolationsperiodendauer T_{ISO} wird dabei die Schwingungsperiode des Bauwerks mit Gleitpendellager verstanden. Durch diese Bemessung des ersten effektiven Krümmungsradius R_{eff,1} der ersten Hauptgleitfläche ergibt sich eine besonders vorteilhafte Isolationswirkung des Bauwerks durch die erste Hauptgleitfläche für Spitzenbodenbeschleunigungen größer als das Bemessungserdbeben.

Sinnvollerweise weist die erste Hauptgleitfläche einen ersten Reibwert µ₁ für die Reibung mit dem Gleiter auf, der in etwa so groß ist, wie für ein Gleitpendellager mit nur einer gekrümmt geformten Hauptgleitfläche, und die zweite Hauptgleitfläche einen zweiten Reibwert µ₂ für die Reibung mit dem Gleiter, die im Bereich der geschmierten Reibung liegt, und insbesondere einen Wert zwischen 0,2% und 2,0%, bevorzugt zwischen 0,4% und 1,5%, und besonders bevorzugt zwischen 0,6% und 1,25% aufweist. Durch diese vorteilhafte Ausgestaltung wird gewährleistet, dass die zweite Hauptgleitfläche insbesondere bei Erdstößen mit nur kleinen Amplituden ein gutes Isolationsverhalten des Gleitpendellagers sicherstellt.

Ebenfalls vorteilhaft weist die erste Hauptgleitfläche einen ersten Reibwert *µ*₁ für die Reibung mit dem Gleiter auf, der in etwa so groß ist wie für ein Gleitpendellager mit nur einer gekrümmt geformten Hauptgleitfläche und die zweite Hauptgleichfläche weist einen zweiten im Vergleich zu *µ*₁ niedrigeren Reibwert *µ*₂ auf, der bei Schmierung der zweiten Hauptgleichfläche im Bereich von etwa 0,2% bis 1,7% liegt und bei Nichtschmierung der zweiten Hauptgleichfläche im Bereich von etwa 2% bis 3,5% liegt. Hierdurch wird einen Mindestschubwiderstand gewährleisten.

Erfindungsgemäß beinhaltet die zweite Hauptgleitfläche ein Begrenzungsmittel zur Begrenzung der Wegkapazität des Gleiters auf der zweiten Hauptgleitfläche. Dabei ist das Begrenzungsmittel insbesondere als ringförmiger Anschlag ausgebildet. Durch das Vorsehen eines solchen Begrenzungsmittels auf der zweiten Hauptgleitfläche bzw. an der zweiten Gleitplatte ist es möglich, die Wirkung der ersten Hauptgleitfläche für Auslenkungsamplituden oberhalb der Wegkapazität des Gleiters auf der zweiten Hauptgleitfläche von der Wirkung der zweiten Hauptgleitfläche zu trennen. Damit kann insbesondere bei großen Erdbebenanregungskräften die Wegkapazität des Gleiters auf der zweiten Hauptgleitfläche derart begrenzt werden, dass das Gleitlager in seinen strukturellen Ausmaßen kleiner ausgestaltet werden kann, als wenn kein Begrenzungsmittel vorgesehen ist.

Dabei ist es besonders vorteilhaft, wenn das Begrenzungsmittel so ausgebildet ist, dass die Wegkapazität D₂ des Gleiters auf der zweiten Hauptgleitfläche im Wesentlichen kleiner-gleich der Wegkapazität D₁ des Gleiters auf der ersten Hauptgleitfläche ist. Damit sind die Dimensionen des entsprechenden Gleitpendellagers im Wesentlichen durch die Wegkapazität des Gleiters auf der ersten Hauptgleitfläche festgelegt, womit das Gleitpendellager in seinen Dimensionen ähnlich einem entsprechenden Single ausgelegt werden kann.

Ferner ist es besonders bevorzugt, wenn die Wegkapazität D₂ des Gleiters auf der zweiten Hauptgleitfläche auf das 0,8-Fache und bevorzugt auf das 0,5-Fache der Wegkapazität D₁ des Gleiters auf der ersten Hauptgleitfläche begrenzt ist. Durch diese weitere Einschränkung der Bewegungskapazität des Gleiters auf der zweiten Hauptgleitfläche ist es möglich, übermäßige Gesamtlagerbewegungen, welche sich aus der Summe der Lagerbewegung an der ersten Hauptgleitfläche und der Lagerbewegung an der zweiten Hauptgleitfläche ergeben, zu vermeiden und somit wiederrum Bauraum und Herstellungskosten einzusparen.

Bevorzugt liegt die Wegkapazität D₂ des Gleiters auf der zweiten Hauptgleitfläche im Bereich des 1,0-Fachen bis 0,25-Fachen, bevorzugt im Bereich des 1,0-Fachen bis 0,7-Fachen des Wertes von D₁ des Gleiters auf der ersten Hauptgleitfläche.

Schließlich ist es sinnvoll, wenn die Wegkapazität des Gleiters auf der zweiten Hauptgleitfläche mindestens das 0,1-Fache und insbesondere mindestens das 0,2-Fache der Wegkapazität des Gleiters auf der ersten Hauptgleitfläche beträgt. Durch diese Mindestanforderung an die Wegkapazität des Gleiters auf der zweiten Hauptgleitfläche wird gewährleistet, dass die zweite Hauptgleitfläche wenigstens über einen gewissen Bereich der Auslenkung hinweg ihre Wirkung entfalten kann und somit auch in der Lage ist, das Isolationsverhalten des gesamten Gleitpendellagers ausreichend zu beeinflussen.

Vorzugsweise ist das Begrenzungsmittel schließlich so ausgebildet, dass die gesamte Wegkapazität des Gleitpendellagers im Wesentlichen auf das Maß der Bewegungskapazität bei einem Gleitpendellager mit nur einer Hauptgleitfläche begrenzt ist. Weiter bevorzugt ist das Begrenzungsmittel so ausgebildet, dass die gesamte Wegkapazität des Gleitpendellagers höchstens gleich groß wie und bevorzugt kleiner als die Wegkapazität eines Gleitpendellager mit nur einer Hauptgleitfläche oder als diejenige eines Gleitpendellagers mit zwei identischen gekrümmt geformten Hauptgleitflächen (nach Art eines Doubles) ist. Dadurch wird sichergestellt, dass das schließlich gebildete Gleitpendellager nicht größer baut, als ein entsprechendes Single und damit einfach verwendet werden kann, um beispielsweise ein bereits vorgesehenes Gleitpendellager des Typs Single ohne weitere strukturelle Anpassungen zu ersetzen.

Zweckmäßigerweise weist der Gleiter zwei Gleiterteile auf, welche über eine gekrümmte Nebengleitfläche flächig miteinander in Kontakt stehen. Dabei steht das erste Gleiterteil wiederrum mit der ersten Hauptgleitfläche in Kontakt während das zweite Gleiterteil mit der zweiten Hauptgleitfläche in Kontakt steht. Durch diese Unterteilung des Gleiters in zwei Gleiterteile und das Vorsehen der Nebengleitfläche ist es möglich, ein Anliegen der entsprechenden Gleitflächen des Gleiters an die beiden Hauptgleitflächen unabhängig von den Bewegungen an beiden Hauptgleitflächen zu gewährleisten, womit die Bewegungen entlang der beiden Hauptgleitflächen entkoppelt sind. Der Gleiter stellt damit zusammen mit den Gleiterteilen ein Gelenk dar, das bevorzugt dazu befähigt ist, die Gleitwege an den beiden Gleitflächen, bzw. Gleitplatten zu entkoppeln. Eine besonders bevorzugte Ausführungsform dieses Gleitpendellagers weist unterschiedlich große Gleitwege, unterschiedliche Reibwerte sowie unterschiedliche effektive Radien an den beiden Hauptgleitflächen auf.

Dabei ist es besonders vorteilhaft, wenn die Nebengleitfläche des Gleiters in ihren Reibeigenschaften so ausgestaltet ist, dass zwischen den beiden Gleiterteilen ein möglichst kleiner dritter Reibwert µ₃ vorhanden ist, der vorzugsweise wesentlich kleiner als der erste Reibwert µ₁ ist und insbesondere einen Wert kleiner ca. 2,0% (oberer Wert der geschmierten Reibung für µ₂), bevorzugt einen Wert kleiner 1,5%, und besonders bevorzug einen Wert im Bereich von 0,6% bis 1.25% aufweist. Durch diese spezielle Wahl des Reibwerts der Nebengleitfläche des Gleiters wird gewährleistet, dass die Nebengleitfläche die notwendige Rotation des Gleitpendellagers gewährleistet, ohne dass das Isolationsverhalten des Gleitpendellagers beeinflusst wird.

Zu guter Letzt ist es zweckmäßig, wenn die Krümmungsradien und Reibeigenschaften der beiden Hauptgleitflächen des Gleitpendellagers dahingehend eingestellt sind, dass das Gleitpendellager einen Rückzentrierfehler von maximal 30%, insbesondere von maximal 20% und besonders bevorzugt von maximal 10% aufweist. Dadurch kann gewährleistet werden, dass die Isolationswirkung des Gleitpendellagers selbst nach einer vorangegangenen Auslösung des Gleitpendellagers bei einer erneuten Auslösung ein ähnliches Isolationsverhalten aufweist, wie bei der vorangegangenen Auslösung des Gleitpendellagers. Somit wird sichergestellt, dass das Gleitpendellager über mehrere Auslösungen hinweg eine weitestgehend ähnliche Isolationswirkung aufweist und nicht bereits vorangegangene Auslösungen des Gleitpendellagers das Isolationsverhalten des Gleitpendellagers über ein hinnehmbares Maß hinaus negativ beeinflussen.

Ein erfindungsgemäßes Verfahren zur Bemessung eines entsprechenden Gleitpendellagers beschreibt, dass eine erste Hauptgleitfläche der ersten Gleitplatte auf einen ersten Lastfall und eine zweite Hauptgleitfläche der zweiten Gleitplatte auf einen zweiten Lastfall ausgelegt wird, welcher sich von dem ersten Lastfall unterscheidet. Das hierdurch erhaltene Gleitpendellager weist im Vergleich zu den herkömmlich bekannten Gleitpendellagern den Vorteil auf, dass sein Isolationsverhalten schließlich nicht nur für die Spitzenbodenbeschleunigungswerte des Bemessungserdbebens sondern auch für Spitzenbodenbeschleunigungswerte jenseits dieses Spitzenbodenbeschleunigungswerts verbessert ist.

Dabei weist der Gleiter zwei Gleiterteile auf, welche über eine gekrümmte Nebengleitfläche flächig miteinander in Kontakt stehen, wobei das erste Gleiterteil wiederum mit der ersten Hauptgleitfläche in Kontakt steht und das zweite Gleiterteil wiederum mit der zweiten Hauptgleitfläche in Kontakt steht. Dieses so gebildete Gelenk ist dazu befähigt, die Gleitwege an den beiden Gleitflächen, bzw. Gleitplatten zu entkoppeln. Eine besonders bevorzugte Ausführungsform des Bemessungsverfahrens führt zu einem Gleitpendellager das unterschiedlich große Gleitwege, unterschiedliche Reibwerte sowie unterschiedliche effektive Radien an den beiden Hauptgleitflächen aufweist.

Vorteilhafterweise wird dabei die erste Hauptgleitfläche auf einen Lastfall mit einem Wert für eine Spitzenbodenbeschleunigung ausgelegt, der maximal dem Spitzenbodenbeschleunigungswert des größten wahrscheinlichen Erdbebens und mindestens dem Spitzenbodenbeschleunigungswert des Bemessungserdbebens entspricht. Damit kann gewährleistet werden, dass das entsprechend bemessene Gleitpendellager auch bei Erdbeben mit Spitzenbodenbeschleunigungswerten zwischen den entsprechenden Werten für das Bemessungserdbeben und dem größten wahrscheinlichen Erdbeben ein verbessertes Isolationsverhalten aufweist und somit auch bei solchen Erdbeben hervorgerufene Belastungen an einem vorgesehenen Bauwerk weitestgehend unterdrückt werden können.

Sinnvollerweise wird die zweite Hauptgleitfläche auf einen zweiten Lastfall mit einem Wert für die Spitzenbodenbeschleunigung ausgelegt, welche kleiner als oder gleich dem Spitzenbodenbeschleunigungswert des Bemessungserdbebens ist. Damit ist es unter anderem möglich, Schäden durch wiederholte Erdbeben mit nur kleinen Spitzenbodenbeschleunigungswerten, welche schließlich insbesondere in Form von Ermüdungserscheinungen auftreten können, zu unterdrücken.

Weiterbildend kann wenigstens der tiefere Reibwert einer der beiden Hauptgleitflächen, insbesondere der Reibwert der zweiten Hauptgleitfläche, derart gewählt werden, dass ein vordefinierter Mindestschubwiderstand des Gleitpendellagers gewährleistet ist. Damit ist es möglich, ein Auslösen des Gleitpendellagers bei nur schwachen Erdbeben und damit einen übermäßigen Verschleiß des Gleitpendellagers zu vermeiden. Wie oben bereits beschrieben erscheint dies besonders vorteilhaft, wenn das entsprechende Bauwerk bereits dazu ausgebildet ist, solche schwachen Erdbeben ohne größere Schäden zu verkraften und das Gleitpendellager im Wesentlichen zum Schutz vor Erdbeben mit wesentlich größeren Anregungen vorgesehen ist. Damit können vor allem auch Wartungskosten für das Gleitpendellager erheblich gesenkt werden.

Ferner ist es sinnvoll, wenn die beiden Hauptgleitflächen in ihrer Geometrie und/oder ihrem Reibverhalten derart aufeinander abgestimmt werden, dass die Kurve der resultierenden absoluten Bauwerksbeschleunigung als Funktion der Spitzenbodenbeschleunigung einen bis hin zum Spitzenbodenbeschleunigungswert des größten wahrscheinlichen Erdbebens im Wesentlichen linearen Verlauf aufweist. Ein linearer Verlauf der resultierenden absoluten Bauwerksbeschleunigung gegenüber der Spitzenbodenbeschleunigung kommt dem Verlauf der resultierenden absoluten Bauwerksbeschleunigung in Abhängigkeit der Spitzenbodenbeschleunigung des Gleitpendellagers mit optimaler viskoser Dämpfung und somit dem idealen Verlauf am nächsten. Damit ist das Verhalten des bemessenen Gleitpendellagers zum einen gut abschätzbar und zum anderen hin zum idealen Verlauf des Gleitpendellagers mit optimaler viskoser Dämpfung optimiert.

Vorteilhafterweise werden die beiden Hauptgleitflächen in ihrer Geometrie und/oder ihrem Reibverhalten derart aufeinander abgestimmt, dass eine Kurve der resultierenden absoluten Bauwerksbeschleunigung als Funktion der Spitzenbodenbeschleunigung einen im Vergleich zu herkömmlichen Gleitpendellagern an den Verlauf der resultierenden absoluten Bauwerksbeschleunigung eines Gleitpendellagers mit optimaler viskoser Dämpfung dichter angenäherten Verlauf aufweist. Ein derart bemessenes Gleitpendellager kommt in seinem Isolationsverhalten dem idealen Isolationsverhalten des Gleitpendellagers mit optimaler viskoser Dämpfung näher als bei herkömmlich bekannten Lagern und weist damit insbesondere ein über die relevanten Spitzenbodenbeschleunigungen hinweg insgesamt verbessertes Isolationsverhalten auf.

Ferner ist es sinnvoll, wenn die beiden Hauptgleitflächen in ihrer Geometrie und/oder in ihrem Reibverhalten derart aufeinander abgestimmt werden, dass der Gleitweg des Gleiters beim zweiten Lastfall, also bei kleineren Spitzenbodenbeschleunigungswerten, entlang der zweiten Hauptgleitfläche wesentlich größer oder etwa gleich groß ist wie entlang der ersten Hauptgleitfläche und beim ersten Lastfall, also bei größeren Spitzenbodenbeschleunigungswerten, der Gleitweg des Gleiters entlang der ersten Hauptgleitfläche größer oder kleiner ist als entlang der zweiten Hauptgleitfläche. Wie bereits oben angedeutet, kann damit die Isolationswirkung der ersten Hauptgleitfläche insbesondere bei großen Erdbebenanregungskräften von der Wirkung der zweiten Hauptgleitfläche entkoppelt werden, um somit das insgesamt resultierende Isolationsverhalten des Gleitpendellagers besser anpassen zu können und darüber hinaus den benötigten Bauraum für das Gleitpendellager zu verkleinern.

Erfindungsgemäß wird in einem ersten Schritt des Bemessungsverfahrens ein erster effektiver Krümmungsradius R_{eff,1} und ein erster Reibwert µ₁ für die erste Hauptgleitfläche unter der Annahme ermittelt, dass das Gleitpendellager nur eine einzige Hauptgleitfläche aufweist, und für die zweite Hauptgleitfläche ein zweiter effektiver Krümmungsradius R_{eff,2} gewählt, welcher im Bereich des 0,75-Fachen bis 2-Fachen, bevorzugt im Bereich des 0,90-Fachen bis 1,5-Fachen des Krümmungsradius der ersten Hauptgleitfläche R_{eff,1} liegt, und für die zweite Hauptgleitfläche ein zweiter Reibwert µ₂ gewählt, welcher zwischen 0,2% und 2,0%, bevorzugt zwischen 0,4% und 1,5% und weiter bevorzugt zwischen 0,6% und 1,25% liegt (im Bereich der geschmierten Reibung), oder welcher kleiner dem ersten effektiven Reibwert *µ*₁ ist, um einen vordefinierten minimalen Schubwiderstand zu gewährleisten. Dabei kann der zweite Reibwert µ₂ insbesondere mindestens um das 0,75-Fache kleiner als der erste Reibwert µ₁ sein oder lediglich kleiner dem ersten Reibwert µ₁ sein und dabei einen vordefinierten minimalen Schubwiderstand gewährleisten. Dadurch ist es möglich, ein Gleitpendellager zu erhalten, welches auch bei Spitzenbodenbeschleunigungswerten unterhalb des Spitzenbodenbeschleunigungswerts des Bemessungserdbebens ein gegenüber herkömmlichen Gleitpendellagern verbessertes Isolationsverhalten aufweist.

Vorzugsweise wird für die zweite Hauptgleitfläche (20) ein zweiter effektiver Krümmungsradius R_{eff,2} gewählt, welcher im Wesentlichen gleich dem ersten effektiven Krümmungsradius R_{eff,1} ist.

Vorzugsweise wird dabei für *R*_{eff,1} und *R*_{eff,2} jeweils mindestens das 0,7-Fache des effektiven Krümmungsradius von dem angenommenen Gleitpendellager mit nur einer gekrümmt geformten Hauptgleitfläche gewählt.

Vorzugsweise werden dabei *R*_{eff,1} und *R*_{eff,2} jeweils größer als das 0,7-Fache des effektiven Krümmungsradius von dem angenommenen Gleitpendellager mit nur einer gekrümmt geformten Hauptgleitfläche gewählt.

Vorzugsweise wird für die zweite Hauptgleitfläche ein zweiter Reibwert *µ*₂ gewählt, welcher bei geschmierter zweiter Hauptgleitfläche zwischen 0,2% und 2,0%, bevorzugt zwischen 0,4% und 1,5% und weiter bevorzugt zwischen 0,6% und 1,25% liegt und bei nichtgeschmierter zweiter Hauptgleitfläche so angesetzt wird, dass ein vordefinierten Mindestschubwiderstand gewährleistet wird, wobei der Reibwert *µ*₂ kleiner als der Reibwert *µ*₁ ist.

Weiterbildend dazu können in einem zweiten Schritt des Bemessungsverfahrens mittels nicht-linearer dynamischer Simulation des Bauwerks mit Gleitpendellager unter Berücksichtigung beider Hauptgleitflächen für wenigstens einen Spitzenbodenbeschleunigungswert, insbesondere jedoch für alle zu erwartenden Spitzenbodenbeschleunigungswerte von sehr kleinen Werten bis hin zu dem Spitzenbodenbeschleunigungswert des größten wahrscheinlichen Erdbebens, die Reibeigenschaften der ersten Hauptgleitfläche und die geometrischen Eigenschaften der zweiten Hauptgleitfläche so aufeinander abgestimmt werden, dass ein zum Verlauf der Spitzenbodenbeschleunigung möglichst proportionales Verhalten der maximalen absoluten Bauwerksbeschleunigung und/oder der maximalen Lagerbewegung mit kleineren Werten erhalten wird, als vor der Abstimmung der Hauptgleitflächen aufeinander. Dadurch kann das aus dem ersten Schritt des Bemessungsverfahrens erhaltene Isolationsverhalten des Gleitpendellagers noch weiter hin zum optimalen Verhalten des Gleitpendellagers mit optimaler viskoser Dämpfung getrimmt werden.

Vorzugsweise sind bei dem Bemessungsverfahren die folgenden Regeln einzuhalten: *µ*₂ ist kleiner als *µ*₁ und D₂ ist kleiner als oder gleich groß wie D₁.

Besonders vorteilhaft ist es dabei, wenn während der Durchführung des zweiten Schritts des Bemessungsverfahrens der erste effektive Krümmungsradius R_{eff,1} und der zweite Reibwert µ₂ konstant gehalten werden. Damit ist es einerseits möglich, die Abstimmung der beiden Hauptgleitflächen aufeinander durch eine Beschränkung der einstellbaren Parameter zu erleichtern und andererseits zu gewährleisten, dass das Gleitpendellager nicht vollkommen neu ausgelegt werden muss und somit nicht mehr den eingangs festgelegten Rahmenbedingungen gerecht wird.

Weiterbildend wird in einem dritten Schritt des Bemessungsverfahrens eine maximal erforderliche Wegkapazität D₁ des Gleiters auf der ersten Hauptgleitfläche des im zweiten Schritt als optimal ermittelten Gleitpendellagers ermittelt und für die Gestaltung des Gleitpendellagers festgesetzt. Über diesen Schritt wird schließlich eine Einschränkung des benötigten Bauraums des Gleitpendellagers bezogen auf die erste Hauptgleitfläche erhalten, womit vorteilhafterweise die Dimensionierung des bemessenen Gleitpendellagers überprüft und ggf. angepasst werden kann.

Ferner ist es von Vorteil, wenn im zweiten Schritt des Bemessungsverfahrens für den zweiten Reibwert µ₂ ein für geschmierte Reibungen typischer Wert, insbesondere ein Wert zwischen 0,2% und 2%, bevorzugt ein Wert zwischen 0,2% und 1,7%, bevorzugt ein Wert zwischen 0,4% und 1,5% und besonders bevorzugt ein Wert zwischen 0.5% und 1.0% angenommen wird. Über diese Festlegung wird sichergestellt, dass das entsprechende Gleitpendellager besonders bei kleinen Erdbeben mit niedrigen Spitzenbodenbeschleunigungen eine ausreichende Isolationswirkung gewährleisten kann. Dies dient vor allem zum Schutz des Gebäudes vor Ermüdungserscheinungen bzw. Schäden, welche durch schwache, jedoch häufig auftretende Erdbebenanregungen hervorgerufen werden können.

Vorteilhafterweise wird in einem vierten Schritt des Bemessungsverfahrens eine zweite Wegkapazität D₂ des Gleiters auf der zweiten Hauptgleitfläche auf einen Wert kleiner-gleich dem Wert der ersten Wegkapazität D₁ des Gleiters auf der ersten Hauptgleitfläche gesetzt. Damit ist es möglich, die Dimensionen des Gleitpendellagers durch die Dimensionen der ersten Hauptgleitfläche zu begrenzen und somit eine effektive Nutzung des vorhandenen Bauraums zu gewährleisten.

Zuletzt ist es vorteilhaft, wenn im ersten Schritt des Bemessungsverfahrens der erste effektive Krümmungsradius der R_{eff,1} und der erste Reibwert µ₁ unter Verwendung der Methode des linearen Antwortspektrums nach DIN EN 15129:2010 ermittelt werden. Zum einen weist dies den Vorteil auf, dass dieses Ermittlungsverfahren bereits bekannt und wohl getestet ist, womit keine neuen Ermittlungsverfahren entwickelt werden müssen. Darüber hinaus gewährleistet dies zumindest teilweise die Vergleichbarkeit des bemessenen Gleitpendellagers mit anderen entsprechend der Norm bemessenen Gleitpendellagern.

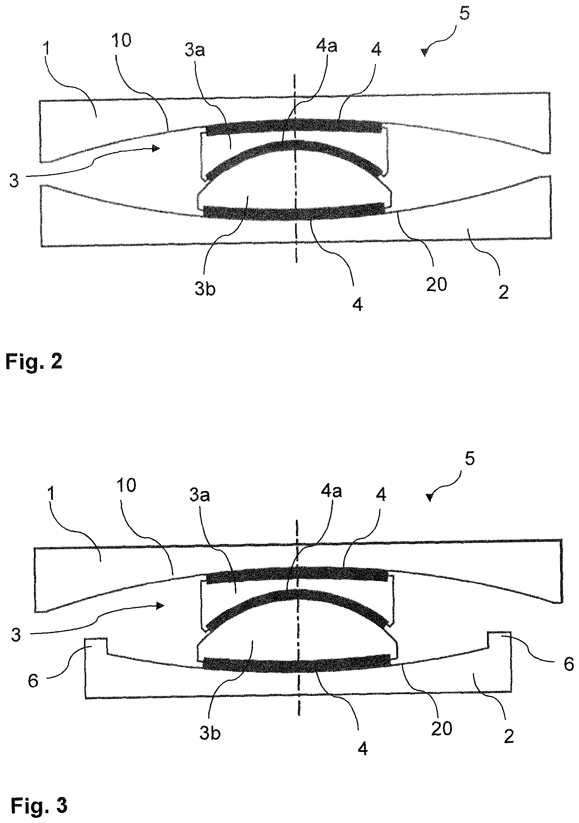

Im Folgenden werden nun vorteilhafte Ausführungsformen der vorliegenden Erfindung anhand von Figuren beschrieben. Dabei zeigt schematisch
- Fig. 2: den Aufbau eines Gleitpendellagers entsprechend Fig. 1C;
- Fig. 3: den Aufbau eines Gleitpendellagers entsprechend einer vorteilhaften Ausführungsform des erfindungsgemäßen Gleitpendellagers;

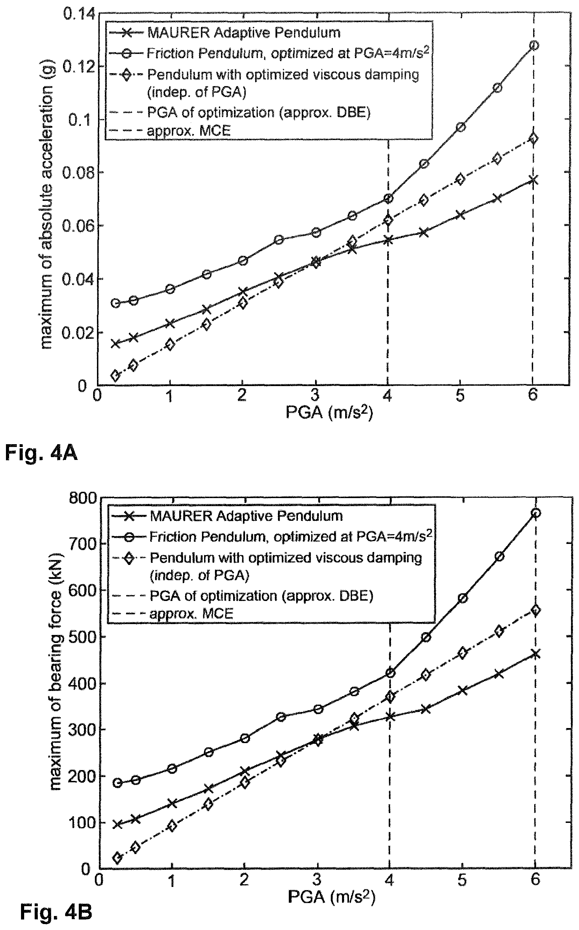

- Fig. 4A: ein Diagramm, in welchem der Verlauf der maximal auftretenden absoluten Bauwerksbeschleunigung ("maximum of absolute acceleration") in Abhängigkeit der Spitzenbodenbeschleunigung ("peak ground acceleration: PGA") eines entsprechend einer ersten Ausführungsform eines nicht im Rahmen der Erfindung liegenden Bemessungsverfahrens bemessenen Gleitpendellagers (vgl. Kurve zu "MAURER Adaptive Pendulum") im Vergleich zu bereits bekannten vergleichbaren Lagern (vgl. Kurven zu "Friction Pendulum" und "Pendulum with optimized viscous damping") dargestellt ist;
- Fig. 4B: ein Diagramm, in welchem der Verlauf der maximal auftretenden horizontalen Lagerkraft ("maximum of bearing force") in Abhängigkeit der Spitzenbodenbeschleunigung ("PGA") eines entsprechend der ersten Ausführungsform des Bemessungsverfahrens bemessenen Gleitpendellagers (vgl. Kurve zu "MAURER Adaptive Pendulum") im Vergleich zu bereits bekannten vergleichbaren Lagern (vgl. Kurven zu "Friction Pendulum" und "Pendulum with optimized viscous damping") dargestellt ist;

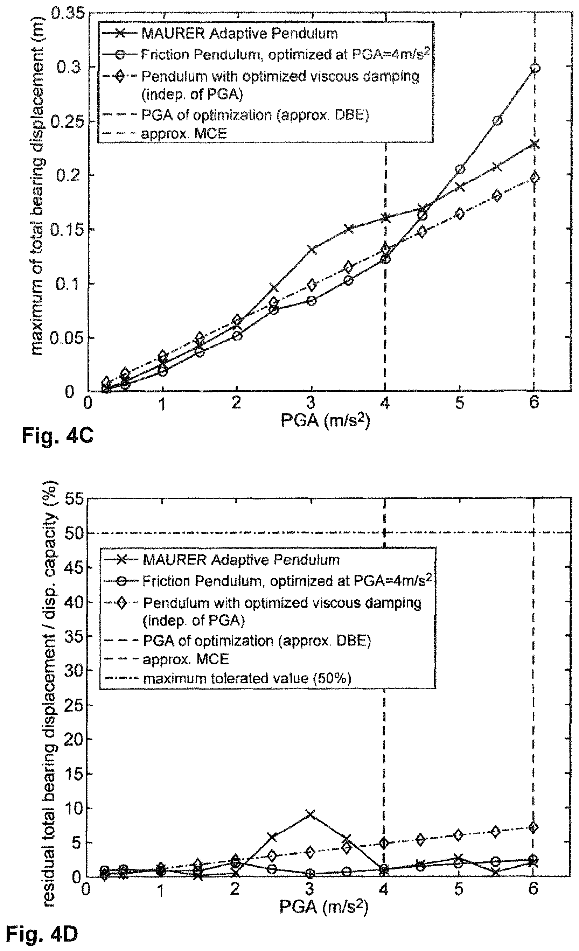

- Fig. 4C: ein Diagramm, in welchem der Verlauf der maximal auftretenden Lagerverschiebung ("maximum of total bearing displacement") in Abhängigkeit der Spitzenbodenbeschleunigung ("PGA") eines entsprechend der ersten Ausführungsform des Bemessungsverfahrens bemessenen Gleitpendellagers (vgl. Kurve zu "MAURER Adaptive Pendulum") im Vergleich zu bereits bekannten vergleichbaren Lagern (vgl. Kurven zu "Friction Prendulum" und "Pendulum with optimized viscous damping") dargestellt ist;
- Fig. 4D: ein Diagramm, in welchem der Verlauf des Rückzentrierfehlers ("residual total bearing displacement") in Abhängigkeit der Spitzenbodenbeschleunigung ("PGA") eines entsprechend der ersten Ausführungsform des Bemessungsverfahrens bemessenen Gleitpendellagers (vgl. Kurve zu "MAURER Adaptive Pendulum") im Vergleich zu bereits bekannten vergleichbaren Lagern (vgl. Kurven zu "Friction Pendulum" und "Pendulum with optimized viscous damping") dargestellt ist;

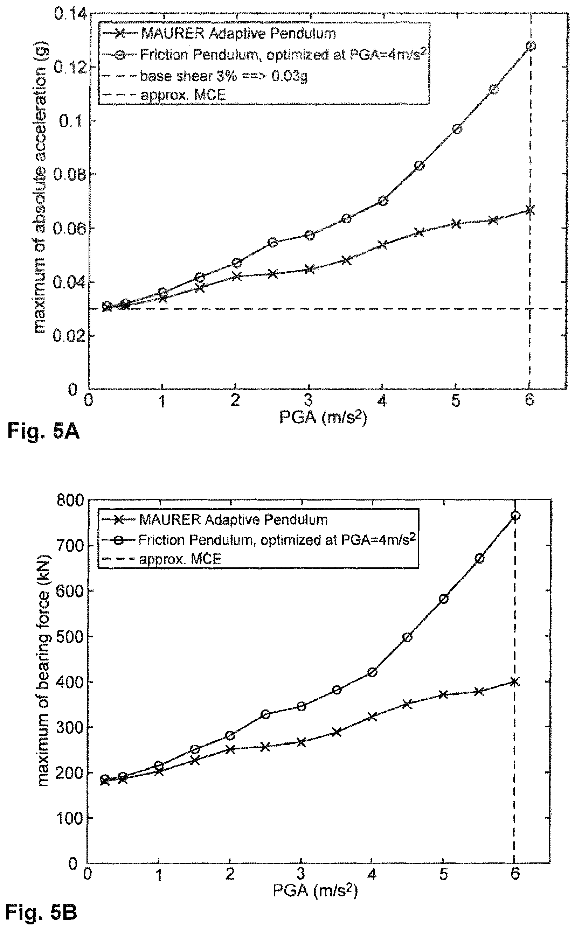

- Fig. 5A: ein Diagramm, in welchem der Verlauf der maximal auftretenden absoluten Bauwerksbeschleunigung ("maximum of absolute acceleration") in Abhängigkeit der Spitzenbodenbeschleunigung ("PGA") eines entsprechend einer zweiten Ausführungsform eines nicht im Rahmen der Erfindung liegenden Bemessungsverfahrens bemessenen Gleitpendellagers (vgl. Kurve zu "MAURER Adaptive Pendulum") im Vergleich zu einem bereits bekannten vergleichbaren Lager (vgl. Kurve zu "Friction Pendulum") dargestellt ist;
- Fig. 5B: ein Diagramm, in welchem der Verlauf der maximal auftretenden horizontalen Lagerkraft ("maximum of bearing force") in Abhängigkeit der Spitzenbodenbeschleunigung ("PGA") eines entsprechend der zweiten Ausführungsform des nicht im Rahmen der Erfindung liegenden Bemessungsverfahrens bemessenen Gleitpendellagers (vgl. Kurve zu "MAURER Adaptive Pendulum") im Vergleich zu einem bereits bekannten vergleichbaren Lager (vgl. Kurve zu "Friction Pendulum") dargestellt ist;

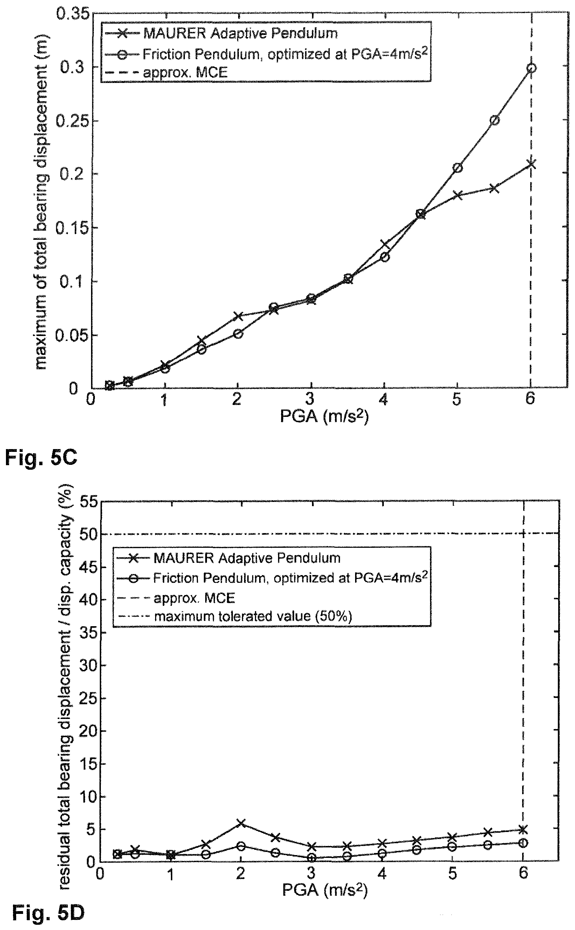

- Fig. 5C: ein Diagramm, in welchem der Verlauf der maximal auftretenden Lagerverschiebung ("maximum of total bearing displacement") in Abhängigkeit der Spitzenbodenbeschleunigung ("PGA") eines entsprechend der zweiten Ausführungsform des nicht im Rahmen der Erfindung liegenden Bemessungsverfahrens bemessenen Gleitpendellagers (vgl. Kurve zu "MAURER Adaptive Pendulum") im Vergleich zu einem bereits bekannten vergleichbaren Lager (vgl. Kurve zu "Friction Pendulum") dargestellt ist;
- Fig. 5D: ein Diagramm, in welchem der Verlauf des Rückzentrierfehlers ("residual total bearing displacement") in Abhängigkeit der Spitzenbodenbeschleunigung ("PGA") eines entsprechend der zweiten Ausführungsform des nicht im Rahmen der Erfindung liegenden Bemessungsverfahrens bemessenen Gleitpendellagers (vgl. Kurve zu "MAURER Adaptive Pendulum") im Vergleich zu einem bereits bekannten vergleichbaren Lager (vgl. Kurve zu "Friction Pendulum") dargestellt ist;

In Figur 3 ist der schematische Aufbau eines Gleitpendellagers 5 entsprechend einer besonders vorteilhaften Ausführungsform der vorliegenden Erfindung dargestellt. Ähnlich zum oben unter Bezug auf Fig. 1C beschriebenen und in Fig. 2 nochmals größer dargestellten herkömmlichen Double mit Gelenk, umfasst das erfindungsgemäße Gleitpendellager 5 eine erste Gleitplatte 1 mit einer ersten Hauptgleitfläche 10, eine zweite Gleitplatte 2 mit einer zweiten Hauptgleitfläche 20, einen in zwei Gleiterteile 3a und 3b unterteilten Gleiter 3 sowie verschiedene Gleitelemente 4 und 4a. Dabei steht das erste Gleiterteil 3a über ein Gleitelement 4 mit der ersten Hauptgleitfläche 10 der ersten Gleitplatte 1 flächig in Kontakt, während das zweite Gleiterteil 3b über ein anderes Gleitelement 4 mit der zweiten Hauptgleitfläche 20 der zweiten Gleitplatte 2 flächig in Kontakt steht. Die beiden Gleiterteile 3a und 3b wiederrum stehen miteinander über das Gleitelement 4a flächig in Kontakt. Ein Unterschied des in Figur 3 gezeigten erfindungsgemäßen Ausführungsbeispiels zu dem in Figur 2 gezeigten Ausführungsbeispiels eines herkömmlichen Double mit Gelenk ist, dass das in Figur 3 gezeigte erfindungsgemäße Gleitpendellager 5 an der zweiten Gleitplatte 2 ein Begrenzungsmittel 6 aufweist, welches die Wegkapazität des Gleiters 3 auf der zweiten Hauptgleitfläche 20 begrenzt und hier insbesondere als Begrenzungsring ausgebildet ist.

An dieser Stelle sei klargestellt, dass das Begrenzungsmittel 6 für gewisse Lastfälle besonders vorteilhaft ist. Ebenfalls muss klargestellt werden, dass das Begrenzungsmittel 6 die gesamte Wegkapazität des Lagers nicht begrenzt, da das Begrenzungsmittel 6 höchsten an einer der beiden Hauptgleitflächen die maximale Bewegung limitiert.

Wie bereits oben beschrieben, entspricht bei dem in Figur 2 gezeigten herkömmlichen Gleitpendellager des Typs Double mit Gelenk die Summe der effektiven Krümmungsradien seiner Hauptgleitflächen 10 und 20 dem effektiven Krümmungsradius der ersten Hauptgleitfläche 10 eines Gleitpendellagers des Typs Single. Ferner sind die Reibwerte der beiden Hauptgleitflächen 10 und 20 des herkömmlichen Double mit Gelenk identisch zueinander. Das bedeutet, dass beim herkömmlichen Double mit Gelenk beide Hauptgleitflächen 10 und 20 strukturell identisch zueinander ausgebildet sind und somit beide Hauptgleitflächen 10 und 20 auf denselben Lastfall hin ausgelegt sind. Dies dient dazu, eine im Gleitpendellager auftretende Lagerbewegung gleichmäßig auf die beiden Hauptgleitflächen 10 und 20 aufzuteilen was in etwa zur Hälfte des von einem Single benötigten horizontalen Einbauraums führt.

Im Gegensatz hierzu sind bei dem in Figur 3 abgebildeten erfindungsgemäßen Gleitpendellager 5 die beiden Hauptgleitflächen 10 und 20 auf zwei sich voneinander unterscheidende Lastfälle ausgelegt. Dies bedeutet, dass sich im Gegensatz zum herkömmlichen und in Fig. 2 gezeigten Double mit Gelenk erfindungsgemäß die beiden Hauptgleitflächen 10 und 20 in Bezug auf ihren Krümmungsradius und ihren Reibwert voneinander unterscheiden.

In der in Fig. 3 gezeigten beispielhaften Ausführungsformen entspricht der Krümmungsradius sowie der Reibwert der ersten Hauptgleitflächen 10 im Wesentlichen dem Krümmungsradius und dem Reibwert der ersten Hauptgleitfläche 10 eines entsprechenden Singles 5. Damit ist der Krümmungsradius der jeweiligen ersten Hauptgleitfläche also fast doppelt so groß wie bei einem entsprechenden Double mit Gelenk. Ferner weist die jeweilige zweite Hauptgleitfläche 20 der gezeigten vorteilhaften beispielhaften Ausführungsform 5 einen effektiven Krümmungsradius auf, welcher im Wesentlichen dem effektiven Krümmungsradius der ersten Hauptgleitfläche 10 entspricht und somit ebenfalls doppelt so groß ist wie der Krümmungsradius der zweiten Hauptgleitfläche 20 eines entsprechenden Doubles mit Gelenk. Der Reibwert der jeweiligen zweiten Hauptgleitfläche 20 ist zudem wesentlich kleiner als der Reibwert der jeweiligen ersten Hauptgleitfläche 10 und liegt im Bereich der geschmierten Reibung, also im Bereich von 0,2% bis 2%, hier beispielsweise bei 1,0%.

Folglich unterscheidet sich das in Figur 3 abgebildete Gleitpendellager 5 insbesondere im Hinblick auf die Werte der Krümmungsradien der jeweiligen ersten Hauptgleitfläche 10 und der jeweiligen zweiten Hauptgleitfläche 20 sowie bezogen auf den Reibwert der jeweiligen zweiten Hautgleitfläche 20 von einem entsprechenden aus dem Stand der Technik bekannten Double mit Gelenk.

Dabei ist die jeweilige erste Hauptgleitfläche 10 auf den Spitzenbodenbeschleunigungswert des Bemessungserdbebens ausgelegt, während die jeweilige zweite Hauptgleitfläche 20 auf einen Spitzenbodenbeschleunigungswert ausgelegt ist, welcher niedriger als der des Bemessungserdbebens ist.

Erfolgt nun eine Anregung eine der in den Figuren 2 und 3 schematisch dargestellten Gleitpendellager 5, wird der Gleiter 3 sich zuerst entlang der jeweiligen zweiten Hauptgleitfläche 20 über die zweite Gleitplatte 2 hinweg bewegen (beispielsweise nach links), während er seine Position relativ zur jeweiligen ersten Gleitplatte 1 im Wesentlichen beibehält.

Beim Gleitpendellager 5 mit Begrenzungsmittel 6 an der Hauptgleitfläche 20 passiert dann näherungsweise folgendes (vgl. Fig. 3): Sobald der Gleiter 3 das Begrenzungsmittel 6 erreicht, kann sich der Gleiter nicht weiter in diese Richtung (also nach links) entlang der Gleitplatte 2 bewegen, womit bei ausreichender Anregungsstärke nun eine Bewegung des Gleiters 3 entlang der ersten Hauptgleitfläche 10 der ersten Gleitplatte 1 vollführt wird, bis der Umkehrpunkt der Anregung erreicht ist. Sobald der Umkehrpunkt der Anregung erreicht ist, und die Anregung in die Gegenrichtung umschwenkt, wird der Gleiter 3 zuerst entlang der zweiten Hauptgleitfläche 20 der Gleitplatte 2 (nach rechts hin) bis hin zur anderen Seite des Begrenzungsmittels 6 bewegt. Sobald der Gleiter 3 das Begrenzungsmittel 6 wieder erreicht hat, ist dessen Bewegung gegenüber der zweiten Gleitplatte 2 nicht mehr möglich. Ab dann wird die restliche Anregung über eine Bewegung des Gleiters 3 entlang der ersten Hauptgleitfläche 10 der ersten Gleitplatte 1 abgefangen. Dieses Spiel wiederholt sich, bis keine Anregung mehr erfolgt und sich der Gleiter vorteilhafterweise wieder in oder möglichst nahe an der jeweiligen Mitte der beiden Gleitplatten 2 und 1 ausrichtet.

Beim Gleitpendellager 5 ohne Begrenzungsmittel an der Hauptgleitfläche 20 passiert näherungsweise folgendes (vgl. Fig. 2): Der Gleiter wird sich gegenüber der zweiten Hauptgleitfläche 20 ebenfalls bewegen, sobald die Reibkraft an der zweiten Hauptgleitfläche 20 gleich der totalen Kraft der ersten Hauptgleitfläche 10 ist, welche die Summe aus Reibkraft an der zweiten Hauptgleitfläche 20 und der Hangabtriebskraft aus der Krümmung der Hauptgleitfläche 20 ist. Dieser Bewegungszustand kann auch beim Gleitpendellager 5 mit Begrenzungsring auftreten, je nach Auslegung der effektiven Radien und Reibwerte der beiden Hauptgleitflächen 10 und 20. In diesem Fall wird der Gleiter erst zu einem späteren Zeitpunkt am Begrenzungsmittel der Hauptgleitfläche 20 ankommen. Der wesentliche Unterschied zwischen dem Gleitpendellager 5 mit Begrenzungsmittel und dem Gleitpendellager 5 ohne Begrenzungsmittel ist, dass das Erstgenannte zu einer etwas kleineren maximalen Lagerbewegung beim größten wahrscheinlichen Erdbeben führt als das Zweitgenannte, dafür ist die Isolation des Erstgenannten leicht weniger gut als des Zweitgenanten, aber immer noch wesentlich besser als des herkömmlichen Gleitpendellagers vom Typ Single oder Double.

Im Gegensatz zu dieser jeweils schwerpunktmäßig auf eine der beiden Gleitplatten begrenzten Lagerbewegung des erfindungsgemäßen Lagers wird beim herkömmlichen Double mit Gelenk jegliche auftretende Lagerbewegung durchwegs gleichmäßig auf die beiden Hauptgleitflächen 10 und 20 verteilt. Das führt für die meisten möglichen Spitzenbodenbeschleunigungen der möglichen Erdbeben zu einem schlechteren Isolationsverhalten. Durch die Auslegung der beiden Hauptgleitflächen 10 und 20 auf unterschiedliche Lastfälle wird also erreicht, dass das entsprechende Gleitpendellager 5 nicht nur auf einen Spitzenbodenbeschleunigungswert, sondern auf einen großen Bereich möglicher Spitzenbodenbeschleunigungswerte ausgelegt wird und somit insgesamt ein dem Gleitpendellager mit optimaler viskoser Dämpfung näherliegendes und folglich besseres Isolationsverhalten über einen großen Bereich möglicher Spitzenbodenbeschleunigungswerte aufweist.

Im Folgenden werden zwei Beispiele für Bemessungsverfahren entsprechender Gleitpendellager vorgestellt und das daraus resultierende Gleitpendellager mit einem entsprechenden herkömmlichen Gleitpendellager des Typs Single verglichen.

Zunächst wird eine auf der Bemessung eines entsprechenden Singles basierende Bemessung der Parameter des Gleitpendellagers durchgeführt. Dazu wird der Krümmungsradius R_{eff,1} der ersten Hauptgleitfläche aus der beabsichtigen Isolationsperiodendauer T_{ISO} nach der Formel ${R}_{eff , 1} = g \times {\left({T}_{ISO}/2π\right)}^{2}$ berechnet. Der hieraus erhaltene Radius entspricht dabei dem Radius der ersten Hauptgleitfläche eines entsprechenden Singles.

Anschließend wird der Reibwert µ₁ für die erste Hauptgleitfläche mit dem Radius R_{eff,1} unter der Annahme eines Singles für den Spitzenbodenbeschleunigungswert des angenommenen Bemessungserdbebens mittels dynamischer Simulation unter Optimierung hin zu minimaler absoluter Bauwerksbeschleunigung ermittelt. Alternativ hierzu könnte der Reibwert µ₁ für die erste Hauptgleitfläche auch über das lineare Verfahren des Antwortspektrums ermittelt werden. Nun wird der Radius R_{eff,2} der zweiten Hauptgleitfläche gleich dem Radius R_{eff,1} der ersten Hauptgleitfläche gewählt und der Reibwert µ₂ der zweiten Hauptgleitfläche mit einem für geschmierte Reibungen typischen Wert angesetzt. Ferner wird die maximale Bewegungskapazität des Gleiters auf den beiden Hauptgleitflächen für das größte wahrscheinliche Erdbeben berechnet.

Diese Schritte dienen einer Grobauslegung der Parameter des Gleitpendellagers und sind für die beiden hier beschriebenen Beispiele des Bemessungsverfahrens gemäß der Erfindung identisch.

Für diese erste Bemessung der Hauptgleitfläche des Gleitpendellagers dienen somit die entsprechenden Werte für ein Gleitpendellagers des Typs Single.

In den vorliegend gezeigten Beispielen wird angenommen, dass der Spitzenbodenbeschleunigungswert des Bemessungserdbebens bei 4 m/s² und der Spitzenbodenbeschleunigungswert des größten wahrscheinlichen Erdbebens bei 6 m/s², also bei 150% des Spitzenbodenbeschleunigungswerts des Bemessungserdbebens, liegt. Ferner soll eine Isolationsperiodendauer von 3,5 Sekunden erhalten werden. Die Optimierung des Reibwerts µ₁ der ersten Hauptgleitfläche 10 für eine minimale absolute Bauwerksbeschleunigung bei der Spitzenbodenbeschleunigung von 4 m/s² ergibt im vorliegenden Beispiel einen Reibwert von 3,0%. Die für die erste Hauptgleitfläche 10 benötigte Bewegungskapazität von d = 0,3m kann aus der Bewegungskapazität des Typs Single für den Spitzenbodenbeschleunigungswert des größten wahrscheinlichen Erdbebens abgeschätzt werden.

Nach der ersten Grobauslegung des Gleitpendellagers gilt es, die vorgesehenen Hauptgleitflächen derart aufeinander abzustimmen, dass das Gleitpendellager bestimmte Randbedingungen erfüllt. Für das erste Beispiel ist es das Ziel ein annährend lineares Isolationsverhalten bei gleichzeitig minimalen absoluten Bauwerksbeschleunigungen zu erhalten.

Ausgehend von der ersten Auslegung wird nun der zweite effektive Krümmungsradius R_{eff,2} vorerst gleich dem ersten effektivem Krümmungsradius R_{eff,1} gesetzt und der zweite Reibwert µ₂ auf einen Wert der geschmierten Reibung im Bereich von 0,2% bis 2% und in diesem Beispiel auf 0,75% gesetzt.

Nach dieser ersten Auslegung wird der Reibwert µ₁ der ersten Hauptgleitfläche, der effektive Radius R_{eff,2} der zweiten Hauptgleitfläche sowie die Bewegungskapazität des Gleiters auf der zweiten Hauptgleitfläche D₂ variiert, bis über den gesamten Bereich der relevanten Spitzenbodenbeschleunigungswerte hinweg wenigstens im Durchschnitt annähernd die kleinste mögliche absolute Bauwerksbeschleunigung erreicht wird, und dabei ein möglichst lineares Isolationsverhalten erhalten wird. Zuletzt wird die erforderliche Bewegungskapazität D₁ des Gleiters auf der ersten Hauptgleitfläche ermittelt, welche sich insbesondere aus dem Spitzenbodenbeschleunigungswert des größten wahrscheinlichen Erdbebens ergibt.

Im vorliegenden Beispiel ergibt diese Optimierung, dass der Reibwert µ₁ der ersten Hauptgleitfläche bei 3,5% liegt, die beiden Krümmungsradien R_{eff,1} und R_{eff,2} der beiden Hauptgleitflächen identisch sind und dem Krümmungsradius des entsprechenden Singles entsprechen, der Reibwert µ₂ der zweiten Hauptgleitfläche bei 0,85% liegt und die notwendige Bewegungskapazität des Gleiters auf der zweiten Hauptgleitfläche D₂ bei 0,130 m liegt. Die Beschränkung der Bewegungskapazität des Gleiters auf der zweiten Hauptgleitfläche wird strukturell durch ein im Gleitpendellager vorgesehenes Begrenzungsmittel erreicht.

Die Figuren 4A bis 4D zeigen schließlich Diagramme, in welchen das Verhalten des nach dem eben beschriebenen Bemessungsverfahren bemessenen Gleitpendellagers im Vergleich zum Verhalten eines entsprechenden Single und eines entsprechenden Gleitpendellagers mit optimaler viskoser Dämpfung.

In Fig. 4A ist dabei die absolute Bauwerksbeschleunigung in Anhängigkeit der Spitzenbodenbeschleunigung (PGA) abgebildet. Bei Vergleich der entsprechenden Kurven miteinander erkennt man, dass das entsprechend dem oben beschriebenen Bemessungsverfahren erhaltene Gleitpendellager (vgl. Kurve zu "Maurer Adaptive Pendulum") einen annährend linearen Verlauf der absoluten Bauwerksbeschleunigung in Abhängigkeit der Spitzenbodenbeschleunigung aufweist. Ferner liegen die entsprechenden Werte für die absoluten Bauwerksbeschleunigung deutlich unterhalb der jeweiligen Werte des entsprechenden Gleitpendellagers des Typs Single (vgl. Kurve zu "Friction Pendulum"). Zudem ist zu erkennen, dass die erhaltenen Werte für die absoluten Bauwerksbeschleunigung für das entsprechend der Ausführungsform bemessene Gleitpendellager im Durchschnitt wesentlich näher an den als ideal angenommen Werten des Gleitpendellagers mit optimaler viskoser Dämpfung (vgl. Kurve zu "Pendulum with optimized viscous damping") liegen, als die jeweiligen Werte für das entsprechende Single. Folglich weist das gemäß der Ausführungsform der vorliegenden Erfindung bemessene Gleitpendellager ein besseres Isolationsverhalten auf, als ein entsprechendes Single, womit Beanspruchungen des Gebäudes durch das erfindungsgemäß bemessene Gleitpendellager besser unterdrückt werden können.

In Fig. 4B ist die für die entsprechenden Lager auftretenden maximalen horizontalen Lagerkraft in Abhängigkeit der Spitzenbodenbeschleunigung abgebildet. Die entsprechenden Kurven ähneln in ihrem Verlauf sehr stark den entsprechenden in Fig. 3A gezeigten Kurven, womit sich die oben unter Bezug auf Fig. 3A erhaltenen Erkenntnissen im Wesentlichen auch auf die maximalen horizontalen Lagerkräfte übertragen lassen.

In dem Diagramm in Fig. 4C ist die maximale Lagerbewegung in Abhängigkeit des Spitzenbodenbeschleunigungswerts für die entsprechenden Lager abgebildet. Es ist ersichtlich, dass die maximale Lagerbewegung durch das größte wahrscheinliche Erdbeben für das erfindungsgemäß bemessene Lager wesentlich kleiner ist als der Wert des herkömmlichen Gleitpendellagers vom Typ Single oder Double.

In Fig. 4D ist für die oben beschriebenen Lager der Rückzentrierfehler in Abhängigkeit der Spitzenbodenbeschleunigung dargestellt. Aus dem Diagramm ist abzulesen, dass sich für das entsprechend ausgelegte Gleitpendellager insbesondere beim Wert für die Spitzenbodenbeschleunigung von 3m/s² ein Rückzentrierfehler von etwas über 10% ergibt. Damit ist für diesen Spitzenbodenbeschleunigungswert der Rückzentrierfehler des entsprechend der vorliegenden Ausführungsform der Erfindung bemessenen Gleitpendellagers höher als für das entsprechende Single oder für das Gleitpendellager mit optimaler viskoser Dämpfung. Jedoch überschreitet der Rückzentrierfehler nicht die Grenze von 50% und liegt sogar weit unterhalb dieses Grenzwerts. Dieser erhöhte Rückzentrierfehler wird durch die oben beschriebenen optimierten Verhaltensweisen des gemäß der vorliegenden Ausführungsform bemessenen Gleitpendellagers in Bezug auf die maximale absolute Bauwerksbeschleunigung, die maximale Lagerkraft und die maximale Lagerbewegung mehr als ausgeglichen und liegt weit unterhalb des Grenzwerts von 50%, womit die vergleichsweise unbedeutende Verschlechterung hier gerne in Kauf genommen wird.

Für das zweite nicht im Rahmen der Erfindung liegende Ausführungsbeispiel eines Bemessungsverfahrens ist es das Ziel, keine Lagerbewegung bei niedrigen Lasten zu erhalten und bei Lasten mit höheren Spitzenbodenbeschleunigungswerten wiederum ein näherungsweise lineares Verhalten mit minimaler absoluter Bauwerksbeschleunigung zu erhalten.

Ausgehend von der oben beschriebenen ersten Auslegung des Gleitpendellagers anhand der Werte, welche sich für ein entsprechendes Gleitpendellager des Typs Singles ergeben, wird der zweite effektive Krümmungsradius R_{eff,2} gleich dem ersten effektiven Krümmungsradius R_{eff,1} gesetzt und der zweite Reibwert µ₂ auf den Wert 3,0% gesetzt, um den geforderten Mindestschubwiderstand von hier 3% der vertikalen Auflast auf dem Lager (identisch mit 3% der absoluten Beschleunigung in g) zu gewährleisten.

Im Zuge einer Abstimmung der Eigenschaften der beiden Hauptgleitflächen aufeinander werden dann die beiden Reibwerte µ₁ und µ₂, der Krümmungsradius R_{eff,2} der zweiten Hauptgleitfläche, sowie die Bewegungskapazität des Gleiters auf der zweiten Hauptgleitfläche unter den Randbedingungen ausgelegt, dass das Gleitpendellager bis hin zu einer gewissen Anregung nicht ausgelöst werden soll und das Gleitpendellager ein annähernd lineares Verhalten der absoluten Bauwerksbeschleunigung als Funktion der Spitzenbodenbeschleunigung erzeugt werden soll. Diese Optimierung wird ebenfalls mittels dynamischer Simulation des Bauwerks mit Gleitpendellager durchgeführt.

Die Resultate aus der Optimierung ergeben im vorliegenden Fall, dass der Reibwert µ₁ der ersten Hauptgleitfläche und der Reibwert µ₂ der zweiten Hauptgleitfläche 3,0% betragen müssen, während die effektiven Radien der ersten Hauptgleitfläche und der zweiten Hauptgleitfläche R_{eff,1} und R_{eff,2} beide gleich dem effektiven Radius des entsprechenden Singles sind. Eine Begrenzung der Bewegungskapazität des Gleiters auf der zweiten Hauptgleitfläche ist hierbei nicht notwendig.

Analog zu den Figuren 4A bis 4D sind in den Figuren 5A bis 5D die maximale absolute Bauwerksbeschleunigung, die maximale Lagerkraft, die maximale Lagerbewegung und der Rückzentrierfehler in Abhängigkeit von der Spitzenbodenbeschleunigung dargestellt.

Wie aus den Diagrammen in den Figuren 5A und 5B hervorgeht, liegen die Werte für die maximale absolute Bauwerksbeschleunigung sowie für die maximale Lagerkraft für das entsprechend der zweiten Ausführungsform bemessene Gleitpendellager (vgl. Kurven zu "Maurer Adaptive Pendulum") deutlich niedriger als für das entsprechende Gleitpendellager vom Typ Single (vgl. Kurven zu "Friction Pendulum"). Dies bedeutet ein verbessertes Isolationsverhalten des nach der zweiten Ausführungsform des nicht im Rahmen der Erfindung liegenden Bemessungsverfahrens bemessenen Gleitpendellagers im Vergleich zum entsprechenden Single.

Aus dem Diagramm in Fig. 5C geht hervor, dass die maximal auftretenden Lagerbewegungen für das entsprechend des zweiten Ausführungsbeispiels bemessene Gleitpendellager für kleine Spitzenbodenbeschleunigungswerte im Wesentlichen identisch mit den maximalen Lagerbewegungen des entsprechenden Single sind, jedoch besonders bei höheren Werten für die Spitzenbodenbeschleunigung erheblich niedrigere maximale Lagerbewegungen erreicht werden. Kleinere Lagerbewegungen ermöglichen es, weniger Bauraum für das entsprechende Gleitpendellager vorzusehen und somit neben einer Kostensenkung der Herstellung des Gleitpendellagers aufgrund niedrigerer Materialkosten auch eine effizientere Ausnutzung des zugänglichen Bauraums zu gewährleisten.

Aus dem in Fig. 5D gezeigten Diagramm geht hervor, dass die Verbesserungen in Bezug auf die maximalen absoluten Bauwerksbeschleunigungen sowie in Bezug auf die maximal auftretenden Lagerkräfte zu einer Erhöhung der Rückzentrierfehler führen. Jedoch liegen die auftretenden Rückzentrierfehler für alle relevanten Spitzenbodenbeschleunigungswerte deutlich unterhalb der Grenze von 50% und nur knapp oberhalb der Werte für das entsprechende Gleitpendellager des Typs Single. Diese geringfügige Erhöhung der Rückzentrierfehler wird jedoch mehr als ausgeglichen durch die Verbesserung des Isolationsverhaltens des Gleitpendellagers bezogen auf die maximal auftretenden absoluten Bauwerksbeschleunigungen und die maximal auftretenden Lagerkräfte.

Natürlich sind auch andere Vorgaben für die Abstimmung bzw. Optimierung der beiden Hauptgleitflächen möglich, welche es erlauben, das erhaltene Gleitpendellager an eine Vielzahl unterschiedlicher Anforderungen an dieses erheblich besser als die herkömmlich bekannten Gleitpendellager anpassen zu können und dabei eine Vielzahl von Vorteilen, wie bspw. niedrigere Herstellungskosten, einen kleineren benötigten Bauraum, niedrigere Wartungskosten zu verwirklichen.

Dabei ergeben sich sowohl für die Ausgestaltung des Gleitpendellagers selbst sowie für das entsprechende Bemessungsverfahren eine Vielzahl von Anpassungs- und Optimierungsmöglichkeiten.

### Bezugszeichenliste

- 1:: erste Gleitplatte
- 2:: zweite Gleitplatte
- 3:: Gleiter
- 3a, 3b, 3c, 3d:: Gleiterteil
- 4, 4a, 4b:: Gleitelement
- 5:: Gleitpendellager
- 10:: erste Hauptgleitfläche
- 20:: zweite Hauptgleitfläche
- 30:: zweite Gleitfläche

## Patentansprüche

1. Gleitpendellager (5) zum Schutz eines Bauwerks vor dynamischen Beanspruchungen aus überwiegend horizontaler Erdbebenanregung mit einer ersten Gleitplatte (1), einer zweiten Gleitplatte (2) und einem zwischen beiden Gleitplatten beweglich angeordnetem Gleiter (3), wobei jede der beiden Gleitplatten eine gekrümmte Hauptgleitfläche (10, 20) aufweist und der Gleiter (3) flächig mit einer ersten Hauptgleitfläche (10) der erstem Gleitplatte (1) und mit einer zweiten Hauptgleitfläche (20) der zweiten Gleitplatte (2) in Kontakt steht, wobei die erste Hauptgleitfläche (10) einen ersten Reibwert *µ*₁ für die Reibung mit dem Gleiter (3) aufweist und die zweite Hauptgleitfläche (20) einen zweiten im Vergleich zu *µ*₁ unterschiedlichen Reibwert *µ*₂ aufweist,
wobei der Gleiter (3) zwei Gleiterteile (3a, 3b) aufweist, welche über eine gekrümmte Nebengleitfläche flächig miteinander in Kontakt stehen, wobei das erste Gleiterteil (3a) wiederum mit der ersten Hauptgleitfläche (10) in Kontakt steht und das zweite Gleiterteil (3b) wiederum mit der zweiten Hauptgleitfläche (20) in Kontakt steht,
wobei die Nebengleitfläche (4a) des Gleiters (3) so ausgestaltet ist, dass zwischen den beiden Gleiterteilen (3a, 3b) ein möglichst kleiner Reibwert *µ*₃ vorhanden ist, der einen Wert von kleiner 2,0% aufweist,
**dadurch gekennzeichnet, dass**
die erste Hauptgleitfläche (10) auf einen ersten Lastfall und die zweite Hauptgleitfläche (20) auf einen sich vom ersten Lastfall unterscheidenden zweiten Lastfall ausgelegt ist, wobei der erste und der zweite Lastfall bestimmte Spitzenbodenbeschleunigungswerte entsprechender Erdbeben darstellen, und
die erste Hauptgleitfläche einen ersten effektiven Krümmungsradius *R*_{eff,1} aufweist und die zweite Hauptgleichfläche einen zweiten effektiven Krümmungsradius *R*_{eff,2} aufweist, wobei die Summe von *R*_{eff,1} und *R*_{eff,2} mindestens das 1,4-Fache des effektiven Krümmungsradius beträgt, der unter der Annahme ermittelt wird, dass das Gleitpendellager (5) nur eine einzige gekrümmt geformte Hauptgleitfläche aufweist und die zweite Hauptgleitfläche (20) ein Begrenzungsmittel (106) zur Begrenzung der Wegkapazität D₂ des Gleiters (3) auf der zweiten Hauptgleitfläche (20) aufweist und dieses Begrenzungsmittel die gesamte Wegkapazität des Lagers nicht begrenzt.

2. Gleitpendellager (5) nach Anspruch 1,
**dadurch gekennzeichnet, dass**
die erste Hauptgleitfläche (10) auf einen ersten Lastfall mit einem Wert für eine Spitzenbodenbeschleunigung (PGA-Wert) ausgelegt ist, der höchstens dem PGA-Wert des größten wahrscheinlichen Erdbebens (MCE) und wenigstens dem PGA-Wert des Bemessungserdbebens (DBE) entspricht.

3. Gleitpendellager (5) nach einem der vorhergehenden Ansprüche,
**dadurch gekennzeichnet, dass**
*R*_{eff,1} und *R*_{eff,2} jeweils mindestens das 0,7-Fache des effektiven Krümmungsradius von einem Gleitpendellager mit nur einer gekrümmt geformten Hauptgleitfläche betragen.

4. Gleitpendellager (5) nach einem der vorhergehenden Ansprüche,
**dadurch gekennzeichnet, dass**
der erste effektive Krümmungsradius *R*_{eff,1} in etwa so groß ist wie für ein Gleitpendellager mit nur einer gekrümmt geformten Hauptgleitfläche und der zweite effektive Krümmungsradius *R*_{eff,2} im Bereich des 0,75-Fachen bis 2-Fachen, und insbesondere im Bereich des 0,90-Fachen bis 1,5-Fachen, des ersten effektiven Krümmungsradius *R*_{eff,1} liegt und besonders bevorzugt gleich dem ersten effektiven Krümmungsradius *R*_{eff,1} ist.

5. Gleitpendellager (5) nach einem der vorhergehenden Ansprüche,
**dadurch gekennzeichnet, dass**
der erste effektive Krümmungsradius *R*_{eff,1} in Metern in etwa dem 0,25-Fachen des Quadrates einer gewünschten Isolationsperiodendauer T_{ISO} in Sekunden des zu schützenden Bauwerks mit Gleitpendellager (5) entspricht.

6. Gleitpendellager (5) nach einem der vorhergehenden Ansprüche,
**dadurch gekennzeichnet, dass**
die erste Hauptgleitfläche (10) einen ersten Reibwert *µ*₁ für die Reibung mit dem Gleiter (3) aufweist, der in etwa so groß ist wie für ein Gleitpendellager (5) mit nur einer gekrümmt geformten Hauptgleitfläche und die zweite Hauptgleichfläche (20) einen zweiten im Vergleich zu *µ*₁ tieferen Reibwert *µ*₂ aufweist, der bei Schmierung der zweiten Hauptgleichfläche (20) im Bereich von etwa 0,2% bis 1,7% liegt und bei Nichtschmierung der zweiten Hauptgleichfläche (20) im Bereich von etwa 2% bis 3,5% liegt.

7. Gleitpendellager (5) nach einem der vorhergehenden Ansprüche,
**dadurch gekennzeichnet, dass** das Begrenzungsmittel (106) als ringförmiger Anschlag ausgebildet ist..

8. Gleitpendellager (5) nach Anspruch 7,
**dadurch gekennzeichnet, dass**
das Begrenzungsmittel (106) so ausgebildet ist, dass die Wegkapazität D₂ des Gleiters (3) auf der zweiten Hauptgleitfläche (20) im Wesentlichen kleiner als die Wegkapazität D₁ des Gleiters (3) auf der ersten Hauptgleitfläche (10) ist.

9. Gleitpendellager (5) nach einem der vorhergehenden Ansprüche,
**dadurch gekennzeichnet, dass**
das Gleitpendellager (5) unterschiedlich große Gleitwege, unterschiedliche Reibwerte sowie unterschiedliche effektive Radien an den beiden Hauptgleitflächen aufweist.

10. Bemessungsverfahren für ein Gleitpendellager (5) nach einem der vorhergehenden Ansprüche bei dem die erste Hauptgleitfläche (10) auf einen ersten Lastfall und die zweite Hauptgleitfläche (20) auf einen sich vom ersten Lastfall unterscheidenden zweiten Lastfall ausgelegt wird, wobei der erste und der zweite Lastfall bestimmte Spitzenbodenbeschleunigungswerte entsprechender Erdbeben darstellen,
**dadurch gekennzeichnet, dass**
in einem ersten Schritt ein erster effektiver Krümmungsradius R_{eff,1} und ein erster Reibwert *µ*₁ für die erste Hauptgleitfläche (10) unter der Annahme ermittelt wird, dass das Gleitpendellager (5) nur eine einzige Hauptgleitfläche aufweist, und für die zweite Hauptgleitfläche (20) ein zweiter effektiver Krümmungsradius R_{eff,2} gewählt wird, welcher im Bereich des 0,75-Fachen bis 2-Fachen, bevorzugt im Bereich des 0,90-Fachen bis 1,5-Fachen des ersten effektiven Krümmungsradius R_{eff,1} liegt, und für die zweite Hauptgleitfläche (20) ein zweiter Reibwert *µ*₂ gewählt wird, welcher kleiner dem ersten Reibwert *µ*₁ ist, insbesondere zwischen 0,2% und 1,7% und bei Nichtschmierung der zweiten Hauptgleichfläche (20) im Bereich von etwa 2% bis 3,5% liegt, , um einen vordefinierten minimalen Schubwiderstand zu gewährleisten.

11. Bemessungsverfahren nach Anspruch 10,
**dadurch gekennzeichnet, dass**
die erste Hauptgleitfläche (10) auf einen ersten Lastfall mit einem Wert für eine Spitzenbodenbeschleunigung (PGA-Wert) ausgelegt wird, der maximal dem PGA-Wert des größten wahrscheinlichen Erdbebens (MCE) und mindestens dem PGA-Wert des Bemessungserdbebens (DBE) entspricht.

## Claims

1. Sliding pendulum bearing (5) for protecting a construction against dynamic stresses from predominantly horizontal earthquake excitation, having a first sliding plate (1), a second sliding plate (2), and a slider (3) movably arranged between both sliding plates, wherein each of the two sliding plates has a curved main sliding surface (10, 20) and the slider (3) is in surface contact with a first main sliding surface (10) of the first sliding plate (1) and with a second main sliding surface (20) of the second sliding plate (2),
wherein the first main sliding surface (10) has a first coefficient of friction *µ*₁ for the friction with the slider (3), and the second main sliding surface (20) has a second coefficient of friction *µ*₂ that differs from *µ₁*,
wherein the slider (3) has two slider parts (3a, 3b) which are in surface contact with one another via a curved subsidiary sliding surface, wherein the first slider part (3a) is in contact with the first main sliding surface (10) and the second slider part (3b) is in contact with the second main sliding surface (20),
wherein the subsidiary sliding surface (4a) of the slider (3) is designed such that a coefficient of friction *µ₃* between the two slider parts (3a, 3b) is as low as possible, having a value of less than 2.0%,
**characterized in that**
the first main sliding surface (10) is designed for a first load case and the second main sliding surface (20) is designed for a second load case which differs from the first load case, wherein the first and second load cases represent specific peak ground acceleration values of corresponding earthquakes, and
the first main sliding surface has a first effective radius of curvature *R*_{eff,1} and the second main sliding surface has a second effective radius of curvature *R_{ff,2},* wherein the sum of *R*_{eff,1} and *R_{eff,2}* is at least 1.4 times the effective radius of curvature that is determined under the assumption that the sliding pendulum bearing (5) has only one single curved main sliding surface and the second main sliding surface (20) has a limitation means (106) for limiting the displacement capacity D₂ of the slider (3) on the second main sliding surface (20), and the limitation means does not limit the total displacement capacity of the bearing.

2. Sliding pendulum bearing (5) according to claim 1,
**characterized in that**
the first main sliding surface (10) is designed for a first load case with a peak ground acceleration (PGA) value that corresponds at most to the PGA value of the maximum credible earthquake (MCE) and at least to the PGA value of the design basis earthquake (DBE).

3. Sliding pendulum bearing (5) according to one of the preceding claims,
**characterized in that**
*R*_{eff,1} and *R*_{eff,2} are each at least 0.7 times the effective radius of curvature of a sliding pendulum bearing having only one curved main sliding surface.

4. Sliding pendulum bearing (5) according to one of the preceding claims,
**characterized in that**
the first effective radius of curvature *R*_{eff,1} is approximately as large as for a sliding pendulum bearing with only one curved main sliding surface, and the second effective radius of curvature *R*_{eff,2} is in the range from 0.75 to 2 times, and in particular in the range from 0.90 to 1.5 times the first effective radius of curvature *R*_{eff,1} and is particularly preferably equal to the first effective radius of curvature *R_{eff,1}.*

5. Sliding pendulum bearing (5) according to one of the preceding claims,
**characterized in that**
the first effective radius of curvature *R*_{eff,1} in metres corresponds approximately to 0.25 times the square of a desired isolation cycle duration T_{ISO} in seconds of the construction to be protected with sliding pendulum bearing (5).

6. Sliding pendulum bearing (5) according to one of the preceding claims,
**characterized in that**
the first main sliding surface (10) has a first coefficient of friction *µ₁* for the friction with the slider (3) which is approximately as large as for a sliding pendulum bearing (5) having only one curved main sliding surface, and the second main sliding surface (20) has a second coefficient of friction *µ₂* which is lower than *µ₁* and which is in the range from about 0.2% to 1.7% when the second main sliding surface (20) is lubricated and in the range from about 2% to 3.5% when the second main sliding surface (20) is not lubricated.

7. Sliding pendulum bearing (5) according to any one of the preceding claims,
**characterized in that**
the limitation means (106) is designed as an annular abutment.

8. Sliding pendulum bearing (5) according to claim 7,
**characterized in that**
the limitation means (6) is formed such that the displacement capacity D₂ of the slider (3) on the second main sliding surface (20) is substantially less than the displacement capacity D₁ of the slider (3) on the first main sliding surface (10).

9. Sliding pendulum bearing (5) according to one of the preceding claims,
**characterized in that**
the sliding pendulum bearing (5) has different sliding paths, different coefficients of friction and different effective radii on the two main sliding surfaces.

10. Method for dimensioning a sliding pendulum bearing (5) according to any one of the preceding claims, in which the first main sliding surface (10) is designed for a first load case and the second main sliding surface (20) is designed for a second load case which differs from the first load case, wherein the first and the second load cases represent specific peak ground acceleration values of corresponding earthquakes,
**characterized in that**
in a first step, a first effective radius of curvature *R*_{eff,1} and a first friction value *µ₁* are determined for the first main sliding surface (10) under the assumption that the sliding pendulum bearing (5) has only one single main sliding surface, and a second effective radius of curvature *R*_{eff,2} is selected for the second main sliding surface (20), which second effective radius of curvature *R_{eff,2}* is selected in the range from 0.75 to 2 times, preferably in the range from 0.90 to 1.5 times the first effective radius of curvature *R_{eff,1},* and a second friction value *µ₂* is selected for the second main sliding surface (20), which is smaller than the first friction value *µ₁*, specifically between 0.2% and 1.7%, and, when the second main sliding surface (20) is not lubricated, lies in the range of approximately 2% to 3.5%, in order to ensure a predefined minimum shear resistance.

11. Method for dimensioning according to claim 10,
**characterized in that**
the first main sliding surface (10) is designed for a first load case with a value for a peak ground acceleration (PGA value) which corresponds at most to the PGA value of the maximum credible earthquake (MCE) and at least to the PGA value of the design basis earthquake (DBE).

## Revendications

1. Appareil d'appui pendulaire coulissant (5) pour la protection d'un ouvrage contre les sollicitations dynamiques dues à une excitation sismique principalement horizontale, comprenant une première plaque de glissement (1), une deuxième plaque de glissement (2) et un coulisseau (3) disposé de manière mobile entre les deux plaques de glissement, chacune des deux plaques de glissement présentant une surface de glissement principale courbe (10, 20) et le coulisseau (3) étant en contact surfacique avec une première surface de glissement principale (10) de la première plaque de glissement (1) et avec une deuxième surface de glissement principale (20) de la deuxième plaque de glissement (2),
la première surface de glissement principale (10) présentant un premier coefficient de frottement *µ₁* pour le frottement avec le coulisseau (3) et la deuxième surface de glissement principale (20) présentant un deuxième coefficient de frottement *µ*₂ qui est différent de *µ*₁,
le coulisseau (3) comprenant deux parties de coulisseau (3a, 3b) qui sont en contact surfacique l'une avec l'autre par l'intermédiaire d'une surface de glissement secondaire courbe, la première partie de coulisseau (3a), à son tour, étant en contact avec la première surface de glissement principale (10) et la deuxième partie de coulisseau (3b), à son tour, étant en contact avec la deuxième surface de glissement principale (20),
la surface de glissement secondaire (4a) du coulisseau (3) étant réalisé de tel façon que le coefficient de frottement *µ₃* entre les deux parties de coulisseau (3a, 3b) a une valeur la plus petite possible, cette valeur étant inférieure à 2%,
**caractérisé en ce que**
la première surface de glissement principale (10) est conçue pour un premier cas de charge et la deuxième surface de glissement principale (20) est conçue pour un deuxième cas de charge différent du premier cas de charge, le premier et le deuxième cas de charge représentant des valeurs maximales d'accélération du sol déterminées de séismes correspondants, et
la première surface de glissement principale présente un premier rayon de courbure effectif *R*_{eff,1} et la deuxième surface de glissement principale présente un deuxième rayon de courbure effectif *R_{eff,2},* la somme de *R*_{eff,1} et *R*_{eff,2} étant au moins égale à 1,4 fois le rayon de courbure effectif qui est déterminé en supposant que l'appareil d'appui pendulaire coulissant (5) n'a qu'une seule surface de glissement principale de forme courbe et la deuxième surface de glissement principale (20) comporte des moyens de limitation (106) pour limiter la capacité de déplacement du coulisseau (3) sur la deuxième surface de glissement principale (20), lesdits moyens de limitation ne limitant pas la capacité de déplacement totale de l'appareil d'appui.

2. Appareil d'appui pendulaire coulissant (5) selon la revendication 1,
**caractérisé en ce que**
la première surface de glissement principale (10) est conçue pour un premier cas de charge présentant une valeur d'accélération maximale du sol (valeur PGA) qui correspond au maximum à la valeur PGA du séisme maximal considéré (MCE) et au minimum à la valeur PGA du séisme de dimensionnement (DBE).

3. Appareil d'appui pendulaire coulissant (5) selon l'une quelconque des revendications précédentes,
**caractérisé en ce que**
*R*_{eff,1} et *R*_{eff,2} sont chacun supérieur ou égal à 0,7 fois le rayon de courbure effectif d'un appareil d'appui pendulaire coulissant ne comportant qu'une seule surface de glissement principale de forme courbe.

4. Appareil d'appui pendulaire coulissant (5) selon l'une quelconque des revendications précédentes,
**caractérisé en ce que**
le premier rayon de courbure effectif *R*_{eff,1} est approximativement égal à celui-ci pour un appareil d'appui pendulaire coulissant ne comportant qu'une seule surface de glissement principale de forme courbe et le deuxième rayon de courbure effectif *R*_{eff,2} est compris entre 0,75 et 2 fois, et en particulier entre 0,90 et 1,5 fois, le premier rayon de courbure effectif *R_{eff,1}* et de manière particulièrement préférée est égal au premier rayon de courbure effectif *R_{eff,1}.*

5. Appareil d'appui pendulaire coulissant (5) selon l'une quelconque des revendications précédentes,
**caractérisé en ce que**
le premier rayon de courbure effectif *R_{eff,1},* en mètres, correspond à environ 0,25 fois le carré d'une durée de période d'isolation T_{ISO} souhaitée, en secondes, de l'ouvrage à protéger comportant l'appareil d'appui pendulaire coulissant (5).

6. Appareil d'appui pendulaire coulissant (5) selon l'une quelconque des revendications précédentes,
**caractérisé en ce que**
la première surface de glissement principale (10) présente un premier coefficient de frottement *µ*₁ pour le frottement avec le coulisseau (3) qui est approximativement égal à celui-ci pour un appareil d'appui pendulaire coulissant (5) ne comportant qu'une seule surface de glissement principale de forme courbe et la deuxième surface de glissement principale (20) présente un deuxième coefficient de frottement *µ*₂ qui est inférieur à *µ*₁ et qui est compris entre environ 0,2% et 1,7% lorsque la deuxième surface de glissement principale (20) est lubrifiée et entre environ 2% à 3,5% lorsque la deuxième surface de glissement principale (20) n'est pas lubrifiée.

7. Appareil d'appui pendulaire coulissant (5) selon l'une quelconque des revendications précédentes,
**caractérisé en ce que**
les moyens de limitation (106) sont réalisés sous forme de butée annulaire.

8. Appareil d'appui pendulaire coulissant (5) selon la revendication 7,
**caractérisé en ce que**
les moyens de limitation (106) sont réalisés de telle façon que la capacité de déplacement D₂ du coulisseau (3) sur la deuxième surface de glissement principale (20) est sensiblement inférieure à la capacité de déplacement D₁ du coulisseau (3) sur la première surface de glissement principale (10).

9. Appareil d'appui pendulaire coulissant (5) selon l'une quelconque des revendications précédentes,
**caractérisé en ce que**
l'appareil d'appui pendulaire coulissant (5) présente, au niveau des deux surfaces de glissement principales, des courses de glissement différentes l'une de l'autre, des coefficients de frottement différents, ainsi que des rayons effectifs différents.

10. Procédé de dimensionnement d'un appareil d'appui pendulaire coulissant (5) selon l'une quelconque des revendications précédentes, dans lequel la première surface de glissement principale (10) est conçue pour un premier cas de charge et la deuxième surface de glissement principale (20) est conçue pour un deuxième cas de charge différent du premier cas de charge, le premier et le deuxième cas de charge représentant des valeurs maximales d'accélération du sol déterminées de séismes correspondants,
**caractérisé en ce que**
dans une première étape, on détermine pour la première surface de glissement principale (10) un premier rayon de courbure effectif *R_{eff,1}* et un premier coefficient de frottement *µ*₁ en supposant que ledit appareil d'appui pendulaire coulissant (5) ne comporte qu'une seule surface de glissement principale, et on choisit pour la deuxième surface de glissement principale (20) un deuxième rayon de courbure effectif *R*_{eff,2} compris entre 0,75 et 2 fois, de préférence entre 0,90 et 1,5 fois, le premier rayon de courbure effectif *R_{eff,1},* et on choisit pour la deuxième surface de glissement principale (20) un deuxième coefficient de frottement *µ*₂ qui est inférieur au premier coefficient de frottement *µ₁* et qui est en particulier compris entre 0,2% et 1,7% et, lorsque la deuxième surface de glissement principale (20) n'est pas lubrifiée, compris entre 2% et 3,5% afin de garantir une résistance minimale prédéfinie au cisaillement.

11. Procédé de dimensionnement selon la revendication 10,
**caractérisé en ce que**
la première surface de glissement principale (10) est dimensionnée pour un premier cas de charge ayant une valeur d'accélération maximale du sol (valeur PGA) qui correspond au maximum à la valeur PGA du séisme maximal considéré (MCE) et au minimum à la valeur PGA du séisme de dimensionnement (DBE).
